# EUROPEAN PATENT APPLICATION

(11) **EP 4 468 180 A1**
(43) Date of publication of application: **27.11.2024**
(21) Application number: 22922219.5
(22) Date of filing: 27.12.2022
(51) Int. Cl.: G06F 21/35, G06F 21/31

(54) **INFORMATION PROCESSING DEVICE, INFORMATION PROCESSING METHOD, AND INFORMATION PROCESSING SYSTEM**

(30) Priority: 18.01.2022 JP 2022005589
(71) Applicant: Sony Group Corporation, Tokyo 108-0075 (JP)
(72) Inventor: ANZUI, Shintaro, Tokyo 108-0075 (JP); KATOU, Makoto, Tokyo 108-0075 (JP); OGAWA, Hiroki, Tokyo 108-0075 (JP); HIRANO, Yuki, Tokyo 108-0075 (JP); KAMOHARA, Tadashi, Tokyo 108-0075 (JP); FUKUOKA, Yuichi, Tokyo 108-0075 (JP); NAKANO, Takashi, Tokyo 108-0075 (JP)
(74) Representative: 2SPL Patentanwälte PartG mbB
(86) International application number: PCT/JP2022/048115
(87) International publication number: WO 2023/140069

(57) **Abstract**

An information processing device (200) is an information processing device, and includes a communication unit (210) that receives, in a case where an inter-device distance between an authentication holding device (100) that holds authentication information used for personal authentication of a user and the information processing device (200) is equal to or less than a predetermined distance, first authentication request information related to an authentication request of the authentication holding device (100) transmitted from the authentication holding device (100) and the authentication information, and an authentication unit (261) that performs authentication of the authentication holding device (100) based on the authentication information in response to the first authentication request information received by the communication unit (210).

## Description

### Field

The present invention relates to an information processing device, an information processing method, and an information processing system.

### Background

Conventionally, device-to-device authentication (also referred to as equipment-to-equipment authentication) for guaranteeing validity of connection between devices is performed in order to prevent erroneous connection and unauthorized connection when connecting the devices. For example, when a contact terminal of a predetermined wireless communication terminal and a contact terminal of another wireless communication terminal are electrically connected, there is known a technique of executing authentication processing of short-range wireless communication between the predetermined wireless communication terminal and the other wireless communication terminal via the connected contact terminals, and starting short-range wireless communication via a communication antenna after completion of the authentication processing.

### Citation List

### Patent Literature

Patent Literature 1: JP 2011-109498 A

### Summary

### Technical Problem

However, in the above-described conventional technique, it is not always possible to safely implement a human-centric system. For example, in the above-described conventional technique, when the contact terminal of a predetermined wireless communication terminal and the contact terminal of another wireless communication terminal are electrically connected to each other, authentication processing of short-range wireless communication is merely executed between the predetermined wireless communication terminal and the other wireless communication terminal via the connected contact terminals, and it is not always possible to safely implement a human-centric system.

Therefore, the present disclosure proposes an information processing device, an information processing method, and an information processing system capable of safely implementing a human-centric system.

### Solution to Problem

To solve the above problem, an information processing device is an information processing device, and includes a communication unit that receives, in a case where an inter-device distance between an authentication holding device that holds authentication information used for personal authentication of a user and the information processing device is equal to or less than a predetermined distance, first authentication request information related to an authentication request of the authentication holding device transmitted from the authentication holding device and the authentication information, and an authentication unit that performs authentication of the authentication holding device based on the authentication information in response to the first authentication request information received by the communication unit.

### Brief Description of Drawings

FIG. 1 is a diagram illustrating a configuration example of an information processing system according to an embodiment of the present disclosure.
FIG. 2 is a sequence diagram illustrating a flow of communication processing related to proximity authentication executed by the information processing system according to the same embodiment.
FIG. 3 is a sequence diagram illustrating a flow of communication processing related to pairing authentication executed by the information processing system according to the same embodiment.
FIG. 4 is a sequence diagram illustrating a flow of communication processing related to owned device authentication executed in the information processing system according to the same embodiment.
FIG. 5 is a block diagram illustrating a configuration of an authentication holding device according to the same embodiment.
FIG. 6 is a block diagram illustrating a configuration of an information processing device according to the same embodiment.
FIG. 7 is a diagram for describing a use case in a case where the information processing system according to the same embodiment includes an imaging device.
FIG. 8 is a diagram for describing a use case in a case where the information processing system according to the same embodiment includes an imaging device.
FIG. 9 is a diagram for describing a use case in a case where the information processing system according to the same embodiment includes an audio reproduction device.
FIG. 10 is a diagram for describing a use case in a case where the information processing system according to the same embodiment includes a video device.
FIG. 11 is a diagram for describing a use case in a case where the information processing system according to the same embodiment includes an unmanned small aircraft for image capturing.
FIG. 12 is a diagram for describing a use case in a case where the information processing system according to the same embodiment includes an animal-type robot.
FIG. 13 is a diagram for describing a use case in a case where the information processing system according to the same embodiment includes an automobile.
FIG. 14 is a diagram for describing a use case in a case where the information processing system according to the same embodiment includes a motorcycle.
FIG. 15 is a diagram for describing a use case in a case where the information processing system according to the same embodiment includes an interior device.
FIG. 16 is a diagram for describing a use case in a case where the information processing system according to the same embodiment includes a lighting device.
FIG. 17 is a diagram for describing a use case in a case where the information processing system according to the same embodiment includes a storage.
FIG. 18 is a diagram for describing a use case in a case where the information processing system according to the same embodiment includes a digital signage.
FIG. 19 is a diagram for describing a use case in a case where the information processing system according to the same embodiment includes a plurality of information processing devices.
FIG. 20 is a diagram for describing a use case in a case where the information processing system according to the same embodiment is applied to a sharing service.
FIG. 21 is a diagram for describing a use case in a case where the information processing system according to the same embodiment includes a plurality of authentication holding devices.
FIG. 22 is a hardware configuration diagram illustrating an example of a computer that implements functions of the information processing device. Description of Embodiments

Hereinafter, an embodiment of the present disclosure will be described in detail with reference to the drawings. Note that in each of the following embodiments, the same parts are denoted by the same reference numerals, and redundant description will be omitted.

Note that the description will be given in the following order.
1. Configuration example of information processing system
2. Procedure of processing related to information processing system
3. Configuration example of authentication holding device
4. Configuration example of information processing device
5. Use case
6. Effects according to present disclosure
7. Hardware configuration

### (Embodiment)

### [1. Configuration example of information processing system]

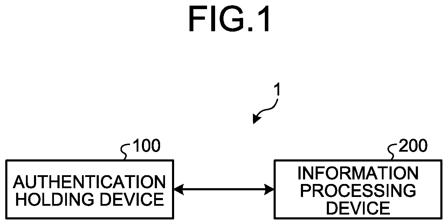

FIG. 1 is a diagram illustrating a configuration example of an information processing system 1 according to an embodiment of the present disclosure. As illustrated in FIG. 1, the information processing system 1 according to the same embodiment includes an authentication holding device 100 and an information processing device 200. These various devices are wirelessly communicably connected via various communication networks such as a wireless local area network (LAN), Wi-Fi (registered trademark), and Bluetooth (registered trademark). Note that the information processing system 1 illustrated in FIG. 1 may include any number of authentication holding devices 100 and any number of information processing devices 200.

The authentication holding device 100 is an information processing device capable of holding authentication information used for personal authentication of a user and causing the information processing device 200 to register authentication information held by the host device. By causing the information processing device 200 to register the authentication information, the authentication holding device 100 can perform device-to-device authentication for confirming that the authentication holding device 100 and the information processing device 200 are devices that are reliable to each other as communication partners using the authentication information. For example, the authentication information is a user ID capable of identifying the user.

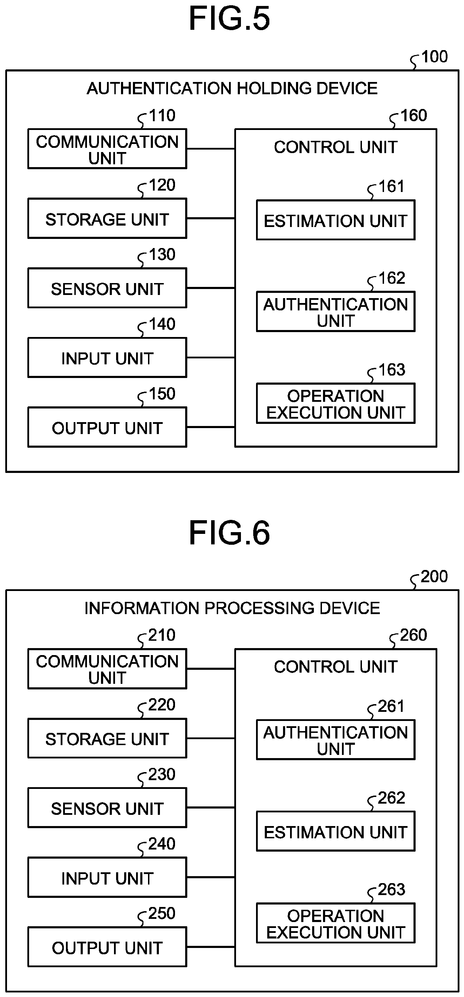

For example, the authentication holding device 100 accesses a device management service that manages the authentication holding device 100, and acquires the user ID of the user from the device management service. When acquiring the user ID of the user, the authentication holding device 100 registers the user ID in a storage unit 120 illustrated in FIG. 5 to be described later. Further, when the user ID is registered, the authentication holding device 100 registers the user identified by the user ID as an authentication target of personal authentication. Note that a producer of the authentication holding device 100 may embed the user ID in the authentication holding device 100 in a production process of the authentication holding device 100.

Further, the authentication holding device 100 may acquire information (for example, a program or the like for generating the user ID) necessary for generating the user ID in the production process of the authentication holding device 100. The authentication holding device 100 generates the user ID on the basis of information necessary for generating the user ID. The authentication holding device 100 may generate a different user ID each time the device-to-device authentication is performed. Note that the authentication holding device 100 may generate the user ID on the basis of the information input by the user. Further, when the user ID is generated, the authentication holding device 100 registers the user ID in the storage unit 120 illustrated in FIG. 5 to be described later.

Note that the authentication information held by the authentication holding device 100 may be biometric information (for example, information regarding a fingerprint, DNA, palm, retina, iris, face, blood vessel, voice, ear shape, or body odor) of the user used for biometric authentication of the user. For example, the authentication holding device 100 includes various sensors capable of acquiring biometric information of the user, and acquires the biometric information of the user using the sensors. When acquiring the biometric information of the user, the authentication holding device 100 registers the biometric information in the storage unit 120 illustrated in FIG. 5 to be described later.

Further, the authentication holding device 100 is an information processing device used by the user. Furthermore, the authentication holding device 100 is an information processing device carried by the user. The authentication holding device 100 is, for example, a smartphone carried by the user. In addition, the authentication holding device 100 may be a portable wearable device (for example, a smart watch, a headphone, an earphone, a wearable glass, a smart ring, a smart bracelet, or the like) or a tablet mobile terminal including a communication function.

The information processing device 200 is an information processing device that, when the authentication holding device 100 carried by the user approaches, executes an operation depending on an inter-device distance between the authentication holding device 100 and the information processing device 200, the operation depending on personal setting set in advance by the user. Specifically, the information processing device 200 acquires authentication information from the authentication holding device 100 in advance and registers the authentication information in the host device. Subsequently, when the authentication holding device 100 approaches, the information processing device 200 uses the authentication information to perform device-to-device authentication for confirming that the authentication holding device 100 and the information processing device 200 are devices that are reliable to each other as communication partners. Subsequently, in a case where the device-to-device authentication is successful, the information processing device 200 executes an operation depending on the inter-device distance between the authentication holding device 100 and the information processing device 200, the operation depending on the personal setting set in advance by the user.

Furthermore, the information processing device 200 is an information processing device used by the user. The information processing device 200 may be any device as long as the device includes a communication function. For example, the information processing device 200 may be an imaging device (camera, video camera, or the like) having a communication function, an audio reproduction device (such as a speaker), a video device (such as a television having a communication function), an unmanned small aircraft (such as a drone), an animal robot, an automobile (including a gasoline vehicle, an electric vehicle, an electric kickboard, or the like), a motorcycle, an interior device (such as a blind), a lighting device (sealing light, indoor lighting device, or the like), a storage (such as a locker), or a digital signage.

As described above, in the information processing system 1, by the authentication holding device 100 that safely holds the authentication information by online acquisition, factory embedding, or self-generation approaching the information processing device 200, the authentication of the information processing device 200 that does not have the authentication information can be safely implemented. Further, the information processing system 1 can seamlessly perform device-to-device authentication for confirming that the authentication holding device 100 and the information processing device 200 are devices that are reliable to each other as communication partners using the inter-device distance between the authentication holding device 100 and the information processing device 200 as a trigger. Further, when the inter-device distance between the authentication holding device 100 and the information processing device 200 becomes equal to or less than a predetermined distance, the information processing system 1 completes the device-to-device authentication between the authentication holding device 100 and the information processing device 200, and enables the authenticated information processing device 200 to execute an operation depending on personal settings of the user. Thus, the information processing system 1 enables a television or a lighting of the information processing device 200 to automatically execute an operation depending on the personal settings of the user (for example, the television is turned on with volume or brightness depending on the personal settings of the user, the lighting is turned on with illuminance depending on the personal settings of the user, or the like) only by the user having the authentication holding device 100 approaching the television or the lighting of the information processing device 200. Therefore, the information processing system 1 can safely implement a human-centric system in which the information processing device 200 automatically operates according to the user having the authentication holding device 100.

### [2. Procedure of processing related to information processing system]

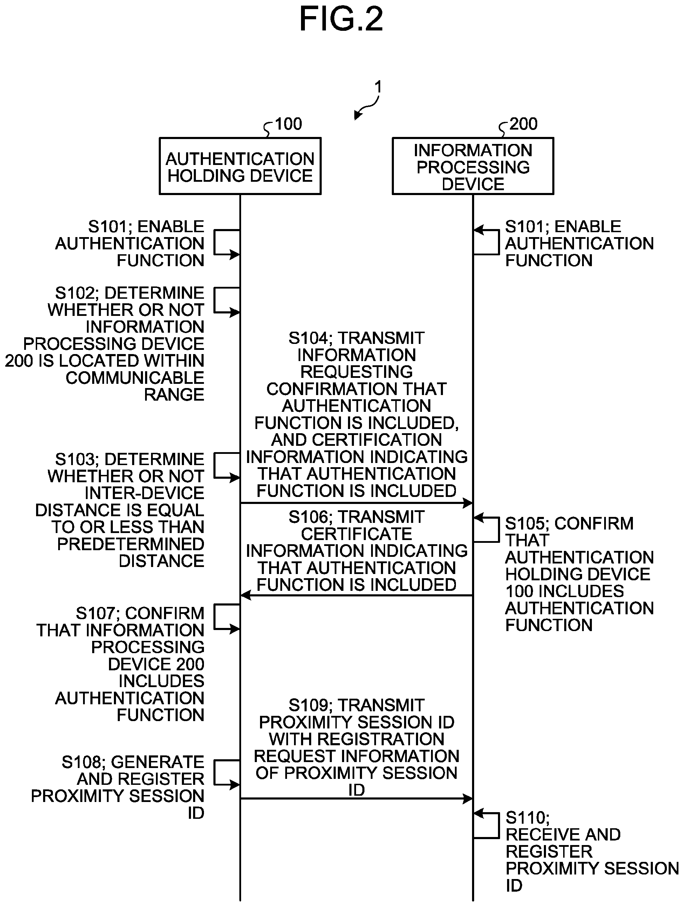

Next, a procedure of various types of information processing executed by the information processing system according to the embodiment of the present disclosure will be described with reference to FIGS. 2 to 4.

First, a flow of communication processing related to proximity authentication executed by the information processing system 1 will be described with reference to FIG. 2. FIG. 2 is a sequence diagram illustrating a flow of communication processing related to proximity authentication executed by the information processing system 1 according to the embodiment of the present disclosure. The information processing system 1 executes proximity authentication which is device-to-device authentication for ensuring that the authentication holding device 100 and the information processing device 200 including an authentication function for mutually guaranteeing validity of connection between devices are present at positions close to each other (hereinafter, simply referred to as an "authentication function"). In a case where the proximity authentication is successful, the authentication holding device 100 and the information processing device 200 share the proximity session ID with each other. Here, the proximity session ID is information indicating that the authentication holding device 100 and the information processing device 200 including the authentication function are in a proximity session state that is a state of being present at positions close to each other, and is information that can identify the proximity session state. For example, the proximity session ID may be information including information capable of identifying the authentication holding device 100 in the proximity session state, information capable of identifying the information processing device 200, a start time of the proximity session state, and information indicating an end time of the proximity session state.

In FIG. 2, the user enables the authentication functions of the authentication holding device 100 and the information processing device 200 (step S101). In a case where the authentication function is enabled, the authentication holding device 100 determines whether or not the information processing device 200 is located within a communicable range (step S102). Further, the user approaches the information processing device 200 with the authentication holding device 100 in a state where the authentication functions of the authentication holding device 100 and the information processing device 200 are each enabled.

In a case where it is determined that the information processing device 200 is not located within the communicable range, the authentication holding device 100 again determines whether or not the information processing device 200 is located within the communicable range. On the other hand, in a case where it is determined that the information processing device 200 is located within the communicable range, the authentication holding device 100 determines whether or not an inter-device distance between the authentication holding device 100 and the information processing device 200 (hereinafter, it may be simply described as an "inter-device distance") is equal to or less than a predetermined distance (step S103). Here, the predetermined distance refers to a distance set in advance as a distance at which the authentication holding device 100 and the information processing device 200 can be regarded as being in the proximity session state. For example, the predetermined distance may be a distance shorter than a distance at which the authentication holding device 100 and the information processing device 200 can transmit and receive radio waves for performing wireless communication with each other.

In a case where it is determined that the inter-device distance is not equal to or less than the predetermined distance, the authentication holding device 100 again determines whether or not the inter-device distance is equal to or less than the predetermined distance. On the other hand, in a case where it is determined that the inter-device distance is equal to or less than the predetermined distance, the authentication holding device 100 transmits, to the information processing device 200, information requesting the information processing device 200 to confirm that the authentication function is included (hereinafter, it may be described as "first confirmation request information"), and certificate information indicating that the authentication holding device 100 includes the authentication function (hereinafter, it may be described as "first certificate information") (step S104).

The information processing device 200 receives the first confirmation request information and the first certificate information from the authentication holding device 100. When receiving the first confirmation request information and the first certificate information, the information processing device 200 confirms that the authentication holding device 100 includes the authentication function on the basis of the first certificate information (step S105).

When the information processing device 200 confirms that the authentication holding device 100 includes the authentication function, the information processing device 200 transmits certificate information indicating that the authentication holding device 100 includes the authentication function (hereinafter, it may be described as "second certificate information") to the authentication holding device (step S106).

The authentication holding device 100 receives the second certificate information from the information processing device 200. When receiving the second certificate information, the authentication holding device 100 confirms that the information processing device 200 includes the authentication function on the basis of the second certificate information (step S107).

When confirming that the information processing device 200 includes the authentication function, the authentication holding device 100 determines that the authentication holding device 100 and the information processing device 200 including the authentication function are in the proximity session state. In a case where it is determined that the they are in the proximity session state, the authentication holding device 100 generates a proximity session ID capable of identifying the proximity session state of the authentication holding device 100 and the information processing device 200. When generating the proximity session ID, the authentication holding device 100 registers the generated proximity session ID in the host device (step S108).

When the proximity session ID is registered, the authentication holding device 100 transmits information requesting the information processing device 200 to register the proximity session ID (hereinafter, it may be described as "first registration request information") and the proximity session ID to the information processing device 200 (step S109).

The information processing device 200 receives the first registration request information and the proximity session ID. When receiving the first registration request information and the proximity session ID, the information processing device 200 registers the proximity session ID in the host device in response to the first registration request information (step S110).

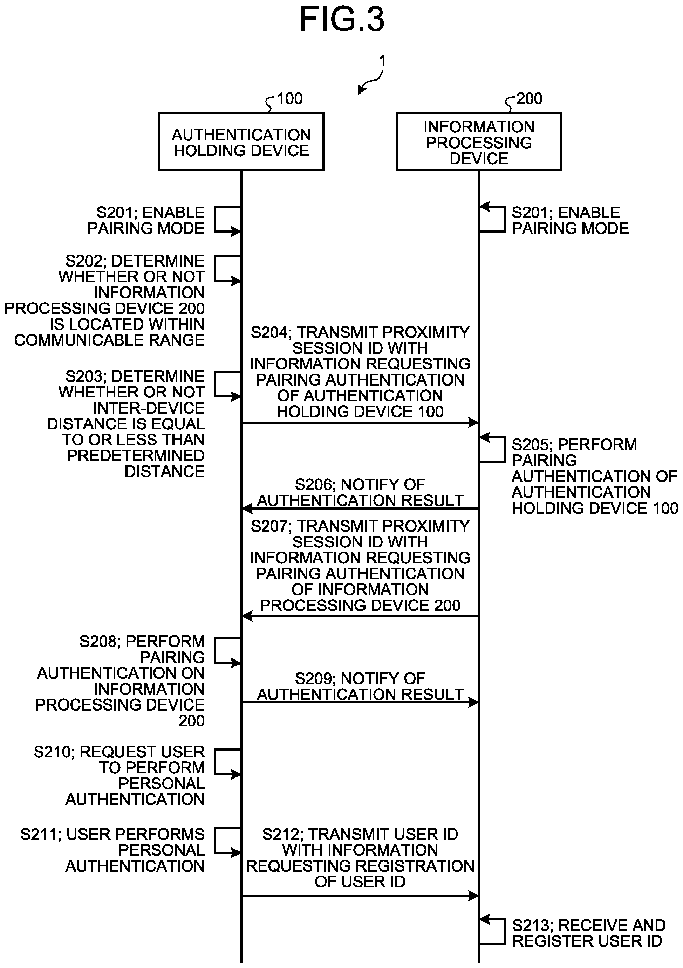

Next, a flow of communication processing related to pairing authentication executed by the information processing system 1 will be described with reference to FIG. 3. FIG. 3 is a sequence diagram illustrating the flow of communication processing related to pairing authentication executed by the information processing system 1 according to the embodiment of the present disclosure. The information processing system 1 executes pairing authentication, which is device-to-device authentication for confirming that the authentication holding device 100 and the information processing device 200 that have succeeded in the proximity authentication described with reference to FIG. 2 are devices that are reliable to each other as communication partners. FIG. 2 is different from FIG. 1 in that the proximity authentication of the authentication holding device 100 and the information processing device 200 is successful, and the authentication holding device 100 and the information processing device 200 each hold a proximity session ID.

In a case where the pairing authentication is successful, the authentication holding device 100 and the information processing device 200 share the authentication information used for personal authentication of the user of the authentication holding device 100 and the information processing device 200 with each other. Here, the authentication information can be rephrased as information indicating that the authentication holding device 100 and the information processing device 200 that have succeeded in the proximity authentication are devices that are reliable to each other as communication partners.

In FIG. 3, the user enables a pairing mode (also referred to as a pairing function) of the authentication holding device 100 and the information processing device 200 (step S201). The user only needs to perform an operation of enabling the pairing mode only when performing the pairing authentication of the authentication holding device 100 and the information processing device 200 for the first time. In a case where the pairing function is enabled, the authentication holding device 100 determines whether or not the information processing device 200 is located within a communicable range (step S202).

In a case where it is determined that the information processing device 200 is not located within the communicable range, the authentication holding device 100 again determines whether or not the information processing device 200 is located within the communicable range. On the other hand, in a case where it is determined that the information processing device 200 is located within the communicable range, the authentication holding device 100 determines whether or not the inter-device distance is equal to or less than the predetermined distance (step S203) .

In a case where it is determined that the inter-device distance is not equal to or less than the predetermined distance, the authentication holding device 100 again determines whether or not the inter-device distance is equal to or less than the predetermined distance. On the other hand, in a case where it is determined that the inter-device distance is equal to or less than the predetermined distance, the authentication holding device 100 transmits, to the information processing device 200, information requesting the information processing device 200 to perform the pairing authentication of the authentication holding device 100 (hereinafter, it may be described as "first pairing authentication request information"), and the proximity session ID held by the authentication holding device 100 (step S204).

The information processing device 200 receives the first pairing authentication request information and the proximity session ID from the authentication holding device 100. When receiving the first pairing authentication request information and the proximity session ID, the information processing device 200 performs the pairing authentication of the authentication holding device 100 in response to the first pairing authentication request information (step S205). For example, when the proximity session ID received from the authentication holding device 100 matches the proximity session ID registered in the information processing device 200, the information processing device 200 determines that the authentication holding device 100 is a device that is reliable as a communication partner (that is, the pairing authentication of the authentication holding device 100 is successful).

When performing the pairing authentication of the authentication holding device 100, the information processing device 200 transmits information indicating an authentication result of the pairing authentication to the authentication holding device 100 (step S206).

In a case where it is determined that the pairing authentication of the authentication holding device 100 is successful, the information processing device 200 transmits, to the authentication holding device 100, information requesting the authentication holding device 100 to perform the pairing authentication of the information processing device 200 (hereinafter, it may be described as "second pairing authentication request information") and the proximity session ID held by the information processing device 200 (step S207).

The authentication holding device 100 receives the second pairing authentication request information and the proximity session ID from the information processing device 200. When receiving the second pairing authentication request information and the proximity session ID, the authentication holding device 100 performs pairing authentication of the information processing device 200 in response to the second pairing authentication request information (step S208). For example, when the proximity session ID received from the information processing device 200 matches the proximity session ID registered in the authentication holding device 100, the authentication holding device 100 determines that the information processing device 200 is a device that is reliable as a communication partner (that is, the pairing authentication of the information processing device 200 is successful).

When performing the pairing authentication of the information processing device 200, the authentication holding device 100 transmits information indicating an authentication result of the pairing authentication to the information processing device 200 (step S209).

In a case where it is determined that the pairing authentication of the information processing device 200 is successful, the authentication holding device 100 requests the user to perform personal authentication (step S210). The user performs the personal authentication (step S211). Specifically, the user inputs personal authentication information (for example, the user ID) to the authentication holding device 100. The authentication holding device 100 performs personal authentication of the user by collating the personal authentication information input by the user with the authentication information (for example, the user ID) held by the authentication holding device 100. Note that, hereinafter, a case where the authentication information is the user ID will be described.

In a case where it is determined that the personal authentication of the user is successful, the authentication holding device 100 transmits information requesting registration of the user ID (hereinafter, it may be described as "second registration request information") and the user ID to the information processing device 200 (step S212).

The information processing device 200 receives the second registration request information and the user ID. When receiving the second registration request information and the user ID, the information processing device 200 registers the user ID in the information processing device 200 in response to the second registration request information (step S213).

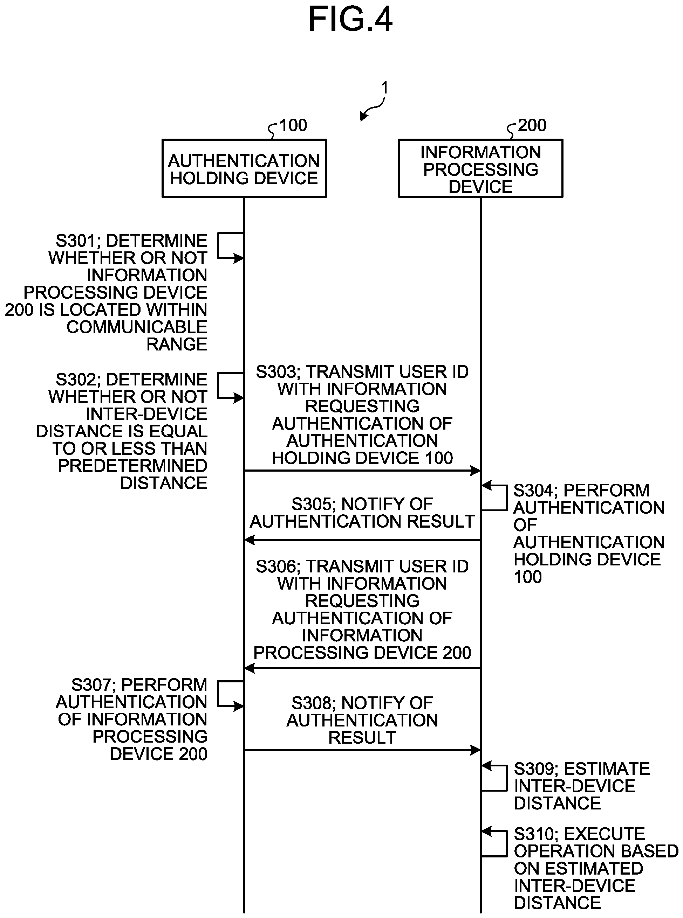

Next, a flow of communication processing relating to owned device authentication executed by the information processing system 1 will be described with reference to FIG. 4. FIG. 4 is a sequence diagram illustrating a flow of communication processing related to the owned device authentication executed by the information processing system 1 according to the embodiment of the present disclosure. The information processing system 1 executes owned device authentication, which is device-to-device authentication for confirming that the authentication holding device 100 and the information processing device 200 that have succeeded in the pairing authentication described with reference to FIG. 3 are devices that are reliable to each other as communication partners. FIG. 4 is different from FIG. 3 in that pairing authentication of the authentication holding device 100 and the information processing device 200 is successful, and each of the authentication holding device 100 and the information processing device 200 holds the user ID. The owned device authentication is successful in a case where the authentication holding device 100 and the information processing device 200 confirm that both hold the user ID. Further, hereinafter, a state in which the owned device authentication of the authentication holding device 100 and the information processing device 200 is successful may be described as a "pairing state".

In FIG. 4, the authentication holding device 100 determines whether or not the information processing device 200 is located within a communicable range (step S301). In a case where it is determined that the information processing device 200 is not located within the communicable range, the authentication holding device 100 again determines whether or not the information processing device 200 is located within the communicable range. On the other hand, in a case where it is determined that the information processing device 200 is located within the communicable range, the authentication holding device 100 determines whether or not the inter-device distance is equal to or less than the predetermined distance (step S302) .

In a case where it is determined that the inter-device distance is not equal to or less than the predetermined distance, the authentication holding device 100 again determines whether or not the inter-device distance is equal to or less than the predetermined distance. On the other hand, in a case where it is determined that the inter-device distance is equal to or less than the predetermined distance, the authentication holding device 100 transmits, to the information processing device 200, information requesting the information processing device 200 to perform the owned device authentication of the authentication holding device 100 (hereinafter, it may be described as "first owned device authentication request information"), and the user ID held by the authentication holding device 100 (step S303) .

The information processing device 200 receives the first owned device authentication request information and the user ID from the authentication holding device 100. When receiving the first owned device authentication request information and the user ID, the information processing device 200 performs the owned device authentication of the authentication holding device 100 in response to the first owned device authentication request information (step S304). For example, in a case where the user ID received from the authentication holding device 100 matches the user ID registered in the information processing device 200, the information processing device 200 determines that the authentication holding device 100 is a device that is reliable as a communication partner (that is, the owned device authentication of the authentication holding device 100 is successful).

When performing the owned device authentication of the authentication holding device 100, the information processing device 200 transmits information indicating an authentication result of the owned device authentication to the authentication holding device 100 (step S305).

In a case where it is determined that the owned device authentication of the authentication holding device 100 is successful, the information processing device 200 transmits, to the authentication holding device 100, information requesting the authentication holding device 100 to perform the owned device authentication of the information processing device 200 (hereinafter, it may be described as "second owned device authentication request information") and the user ID held by the information processing device 200 (step S306).

The authentication holding device 100 receives the second owned device authentication request information and the user ID from the information processing device 200. When receiving the second owned device authentication request information and the user ID, the authentication holding device 100 performs the owned device authentication of the information processing device 200 in response to the second owned device authentication request information (step S307). For example, in a case where the user ID received from the information processing device 200 matches the user ID registered in the authentication holding device 100, the authentication holding device 100 determines that the information processing device 200 is a device that is reliable as a communication partner (that is, the owned device authentication of the information processing device 200 is successful).

When performing the owned device authentication of the information processing device 200, the authentication holding device 100 transmits information indicating an authentication result of the owned device authentication to the information processing device 200 (step S308).

The information processing device 200 receives the authentication result of the owned device authentication from the authentication holding device 100. When the authentication result of the owned device authentication of the information processing device 200 is successful, the information processing device 200 estimates the inter-device distance (step S309). Subsequently, the information processing device 200 executes an operation depending on the estimated inter-device distance (step S310). For example, the information processing device 200 executes an operation depending on the inter-device distance and depending on the personal setting set in advance by the user.

Note that the information processing system 1 can cancel the pairing state between the authentication holding device 100 and the information processing device 200. For example, in a case where it is determined that the information processing device 200 (the authentication holding device 100) does not exist within the predetermined range from the authentication holding device 100 (the information processing device 200) for a predetermined period, the authentication holding device 100 (the information processing device 200) deletes the user ID registered in the authentication holding device 100 (the information processing device 200) to cancel the pairing state. Note that the authentication holding device 100 may cancel the pairing state by deleting the user ID registered in the authentication holding device 100 when receiving an operation of canceling the pairing state or an operation of deleting the user ID from the user. In addition, the authentication holding device 100 may transmit a request for deleting the user ID to the information processing device 200 when receiving the operation of canceling the pairing state or the operation of deleting the user ID from the user. When receiving a request for deleting the user ID from the authentication holding device 100, the information processing device 200 deletes the user ID registered in the information processing device 200 in response to the request for deleting the user ID, thereby canceling the pairing state.

### [3. Configuration example of authentication holding device]

FIG. 5 is a block diagram illustrating a configuration of the authentication holding device according to the embodiment of the present disclosure. As illustrated in FIG. 5, the authentication holding device 100 includes a communication unit 110, a storage unit 120, a sensor unit 130, an input unit 140, an output unit 150, and a control unit 160.

The communication unit 110 is implemented by a network interface card (NIC), an antenna, or the like. The communication unit 110 transmits and receives information to and from the information processing device 200 by short-range wireless communication such as Wi-Fi (registered trademark), Bluetooth (registered trademark), or a wireless local area network (LAN).

The storage unit 120 is reproduced by, for example, a semiconductor memory element such as a random access memory (RAM) or a flash memory, or a storage device such as a hard disk or an optical disk. The storage unit 120 stores authentication information (for example, the user ID). Further, the storage unit 120 stores a program for executing various types of information processing according to the embodiment. For example, the storage unit 120 stores an information processing program that executes various types of information processing regarding the proximity authentication described with reference to FIG. 2, the pairing authentication described with reference to FIG. 3, and the owned device authentication described with reference to FIG. 4.

The sensor unit 130 includes various sensors mounted on or connected to the authentication holding device 100. Note that the connection may be a wired connection or a wireless connection. For example, the sensors may be a detection device other than the authentication holding device 100, such as a wearable device or a wireless device. Specifically, the sensor unit 130 includes a distance measuring sensor. For example, the sensor unit 130 may include radio detection and ranging (RADAR) using radio waves of ultra wide band (UWB, ultra-wideband wireless communication) as the distance measuring sensor. In addition, the sensor unit 130 may include RADAR using radio waves other than UWB as the distance measuring sensor. Furthermore, the sensor unit 130 may include a sensor other than the RADAR as the distance measuring sensor. For example, the sensor unit 130 may include a light detection and ranging (LiDAR) sensor, an ultrasonic sensor, a stereo camera, or the like as the distance measuring sensor. In addition, the sensor unit 130 may include various sensors capable of acquiring biometric information of the user.

Various operations are input to the input unit 140 from the user. For example, the input unit 140 may receive various operations from the user via the display surface (for example, the output unit 150) by a touch panel function. In addition, the input unit 140 may receive various operations from a button provided in the authentication holding device 100 or a keyboard or a mouse connected to the authentication holding device 100. For example, the input unit 140 receives an input operation of personal authentication information (for example, the user ID) used for personal authentication of the user from the user.

The output unit 150 is, for example, a display screen implemented by a liquid crystal display, an organic electro-luminescence (EL) display, or the like, and is a display device for displaying various types of information. The output unit 150 displays various types of information under the control of the control unit 160. Note that, in a case where a touch panel is employed as the authentication holding device 100, the input unit 140 and the output unit 150 are integrated. In addition, in the following description, the output unit 150 may be described as a screen.

The control unit 160 is a controller, and is implemented by, for example, a central processing unit (CPU), a micro processing unit (MPU), or the like executing various programs (corresponding to an example of the above-described information processing program) stored in a storage device inside the authentication holding device 100 using a RAM as a work area. Furthermore, the control unit 160 is a controller, and may be implemented by, for example, an integrated circuit such as an application specific integrated circuit (ASIC) or a field programmable gate array (FPGA).

The control unit 160 includes an estimation unit 161, an authentication unit 162, and an operation execution unit 163 as functional units, and may implement or execute an operation execution unit of information processing described below. Note that an internal configuration of the control unit 160 is not limited to the configuration illustrated in FIG. 5, and may be another configuration as long as information processing to be described later is performed. In addition, each functional unit indicates the function of the control unit 160, and is not necessarily physically distinguished.

In a case where the authentication function is enabled, the estimation unit 161 determines whether or not the information processing device 200 is located within a communicable range. Specifically, the estimation unit 161 determines whether or not the information processing device 200 is located within the communicable range on the basis of sensor information acquired from the distance measuring sensor included in the sensor unit 130.

Further, in a case where it is determined that the information processing device 200 is located within the communicable range, the estimation unit 161 determines whether or not the inter-device distance is equal to or less than the predetermined distance. Specifically, the estimation unit 161 compares the inter-device distance with the predetermined distance, and determines whether or not the inter-device distance is equal to or less than the predetermined distance.

In a case where the estimation unit 161 determines that the inter-device distance is equal to or less than the predetermined distance, the authentication unit 162 transmits an electronic certificate of the authentication holding device 100 (hereinafter, a first electronic certificate) to the information processing device 200 via the communication unit 110.

Further, the authentication unit 162 receives an electronic certificate of the information processing device 200 (hereinafter, a second electronic certificate) from the information processing device 200 via the communication unit 110. When receiving the second electronic certificate from the information processing device 200, the authentication unit 162 encrypts the first confirmation request information and the first certificate information using a public key included in the second electronic certificate. Subsequently, the authentication unit 162 transmits the encrypted first confirmation request information and first certificate information to the information processing device 200 via the communication unit 110.

Further, the authentication unit 162 receives the encrypted second certificate information from the information processing device 200 via the communication unit 110. When receiving the encrypted second certificate information, the authentication unit 162 decrypts the encrypted second certificate information using the secret key held by the authentication holding device 100. When decrypting the second certificate information, the authentication unit 162 confirms that the information processing device 200 includes the authentication function on the basis of the second certificate information.

Further, in a case where the authentication unit 162 confirms that the information processing device 200 includes the authentication function, the authentication unit determines that the authentication holding device 100 and the information processing device 200 including the authentication function are in the proximity session state. In a case where it is determined that they are in the proximity session state, the authentication unit 162 generates a proximity session ID capable of identifying the proximity session state of the authentication holding device 100 and the information processing device 200. When generating the proximity session ID, the authentication unit 162 registers the generated proximity session ID in the host device.

Further, in a case where the proximity session ID is registered, the authentication unit 162 encrypts the first registration request information and the proximity session ID using the public key included in the second electronic certificate. Subsequently, the authentication unit 162 transmits the encrypted first registration request information and proximity session ID to the information processing device 200 via the communication unit 110.

In a case where the pairing function is enabled, the estimation unit 161 determines whether or not the information processing device 200 is located within a communicable range. Further, in a case where it is determined that the information processing device 200 is located within the communicable range, the estimation unit 161 determines whether or not the inter-device distance is equal to or less than the predetermined distance.

When the estimation unit 161 determines that the inter-device distance is equal to or less than the predetermined distance, the authentication unit 162 encrypts the first pairing authentication request information and the proximity session ID held by the authentication holding device 100 using the public key included in the second electronic certificate. Subsequently, the authentication unit 162 transmits the encrypted first pairing authentication request information and proximity session ID to the information processing device 200 via the communication unit 110.

Further, the authentication unit 162 receives the encrypted second pairing authentication request information and proximity session ID from the information processing device 200 via the communication unit 110. When receiving the encrypted second pairing authentication request information and proximity session ID, the authentication unit 162 decrypts the encrypted second pairing authentication request information and proximity session ID using the secret key held by the authentication holding device 100. When decrypting the second pairing authentication request information and the proximity session ID, the authentication unit 162 performs the pairing authentication of the information processing device 200 in response to the second pairing authentication request information. Specifically, the authentication unit 162 performs the pairing authentication of the information processing device 200 by collating the proximity session ID received from the information processing device 200 with the proximity session ID registered in the authentication holding device 100. For example, in a case where the proximity session ID received from the information processing device 200 matches the proximity session ID registered in the authentication holding device 100, the authentication unit 162 determines that the information processing device 200 is a device that is reliable as a communication partner (that is, the pairing authentication of the information processing device 200 is successful).

Further, when performing the pairing authentication of the information processing device 200, the authentication unit 162 encrypts information indicating an authentication result of the pairing authentication using the public key included in the second electronic certificate. Subsequently, the authentication unit 162 transmits the encrypted information indicating an authentication result of the pairing authentication to the information processing device 200 via the communication unit 110.

Further, in a case where it is determined that the pairing authentication of the information processing device 200 is successful, the authentication unit 162 requests the user to perform the personal authentication. Specifically, the authentication unit 162 outputs, to the output unit 150, information requesting the user to perform the personal authentication. The authentication unit 162 acquires personal authentication information input by the user via the input unit 140.

Further, when acquiring the personal authentication information input by the user, the authentication unit 162 performs personal authentication of the user by collating the personal authentication information input by the user with the authentication information (for example, the user ID) held by the authentication holding device 100. For example, when the personal authentication information input by the user and the authentication information held by the authentication holding device 100 match, the authentication unit 162 determines that the user is the person himself/herself (that is, the authentication of the user is successful).

Further, in a case where it is determined that the personal authentication of the user is successful, the authentication unit 162 encrypts the second registration request information and the user ID using the public key included in the second electronic certificate. Subsequently, the authentication unit 162 transmits the encrypted second registration request information and user ID to the information processing device 200 via the communication unit 110.

Further, the estimation unit 161 determines whether or not the information processing device 200 is located within the communicable range. Furthermore, in a case where it is determined that the information processing device 200 is located within the communicable range, the estimation unit 161 determines whether or not the inter-device distance is equal to or less than the predetermined distance.

When the estimation unit 161 determines that the inter-device distance is equal to or less than the predetermined distance, the authentication unit 162 encrypts the first owned device authentication request information and the user ID held by the authentication holding device 100 using the public key included in the second electronic certificate. Subsequently, the authentication unit 162 transmits the encrypted first owned device authentication request information and user ID to the information processing device 200 via the communication unit 110.

The authentication unit 162 receives the encrypted second owned device authentication request information and user ID from the information processing device 200. When receiving the encrypted second owned device authentication request information and user ID, the authentication unit 162 decrypts the encrypted second owned device authentication request information and user ID using the secret key held by the authentication holding device 100. When decrypting the second owned device authentication request information and the user ID, the authentication unit 162 performs owned device authentication of the information processing device 200 in response to the second owned device authentication request information. Specifically, the authentication unit 162 performs the owned device authentication of the information processing device 200 by collating the user ID received from the information processing device 200 with the user ID registered in the authentication holding device 100. For example, in a case where the user ID received from the information processing device 200 matches the user ID registered in the authentication holding device 100, the authentication unit 162 determines that the information processing device 200 is a device that is reliable as a communication partner (that is, the owned device authentication of the information processing device 200 is successful).

When performing the owned device authentication of the information processing device 200, the authentication unit 162 encrypts information indicating an authentication result of the owned device authentication using the public key included in the second electronic certificate. Subsequently, the authentication unit 162 transmits the encrypted information indicating an authentication result of the owned device authentication to the information processing device 200 via the communication unit 110.

The operation execution unit 163 executes any operation in accordance with an operation of the user.

### [4. Configuration example of information processing device]

FIG. 6 is a block diagram illustrating a configuration of an information processing device according to the embodiment of the present disclosure. As illustrated in FIG. 6, the information processing device 200 includes a communication unit 210, a storage unit 220, a sensor unit 230, an input unit 240, an output unit 250, and a control unit 260.

The communication unit 210 is implemented by an NIC, an antenna, or the like. The communication unit 210 transmits and receives, for example, information to and from the authentication holding device 100 by short-range wireless communication such as Wi-Fi (registered trademark), Bluetooth (registered trademark), or a wireless local area network (LAN).

The storage unit 220 is reproduced by, for example, a semiconductor memory element such as a RAM or a flash memory, or a storage device such as a hard disk or an optical disk. The storage unit 220 stores the authentication information (for example, the user ID) received from the authentication holding device 100. Further, the storage unit 220 stores a program for executing various types of information processing according to the embodiment. For example, the storage unit 220 stores an information processing program that executes various types of information processing regarding the proximity authentication described with reference to FIG. 2, the pairing authentication described with reference to FIG. 3, and the owned device authentication described with reference to FIG. 4.

The sensor unit 230 includes various sensors mounted on or connected to the information processing device 200. Note that the connection may be a wired connection or a wireless connection. For example, the sensors may be a detection device other than the information processing device 200, such as a wearable device or a wireless device. Specifically, the sensor unit 230 includes a distance measuring sensor. For example, the sensor unit 230 may include a RADAR using radio waves of UWB as the distance measuring sensor. In addition, the sensor unit 230 may include a RADAR using radio waves other than UWB as the distance measuring sensor. Furthermore, the sensor unit 230 may include a sensor other than the RADAR as the distance measuring sensor. For example, the sensor unit 230 may include a LiDAR, an ultrasonic sensor, a stereo camera, or the like as the distance measuring sensor.

Various operations are input to the input unit 240 from the user. For example, the input unit 240 may receive various operations from the user via the display surface (for example, the output unit 250) by a touch panel function. In addition, the input unit 240 may receive various operations from a button provided in the information processing device 200 or a keyboard or a mouse connected to the information processing device 200.

The output unit 250 outputs information depending on the function of the information processing device 200. Specifically, the output unit 250 outputs various types of information under the control of the control unit 260.

For example, in a case where the information processing device 200 is a video device, the output unit 250 is a display screen implemented by a liquid crystal display, an organic electro-luminescence (EL) display, or the like, and is a display device for displaying various types of information. Note that, in a case where a touch panel is employed as the information processing device 200, the input unit 240 and the output unit 250 are integrated. Further, in the following description, the output unit 250 may be described as a screen. Furthermore, for example, in a case where the information processing device 200 is an audio reproduction device, the output unit 250 is a speaker and is a sound output device that outputs various kinds of sound information.

The control unit 260 is a controller, and is implemented by, for example, a CPU, an MPU, or the like executing various programs (corresponding to an example of the above-described information processing program) stored in a storage device inside the information processing device 200 using a RAM as a work area. Further, the control unit 260 is a controller and is implemented by, for example, an integrated circuit such as an ASIC or an FPGA.

The control unit 260 includes an authentication unit 261, an estimation unit 262, and an operation execution unit 263 as functional units, and may implement or execute an operation of information processing described below. Note that the internal configuration of the control unit 260 is not limited to the configuration illustrated in FIG. 6, and may be another configuration as long as information processing to be described later is performed. In addition, each functional unit indicates the function of the control unit 260, and is not necessarily physically distinguished.

When receiving the first electronic certificate from the authentication holding device 100, the authentication unit 261 transmits the second electronic certificate to the authentication holding device 100 via the communication unit 210.

Further, the authentication unit 261 receives the encrypted first confirmation request information and first certificate information from the authentication holding device 100. When receiving the encrypted first confirmation request information and first certificate information, the authentication unit 261 decrypts the encrypted first confirmation request information and first certificate information, using the secret key held by the information processing device 200. When decrypting the first certificate information, the authentication unit 261 confirms that the authentication holding device 100 includes the authentication function on the basis of the first certificate information.

Further, in a case where it is confirmed that the authentication holding device 100 includes the authentication function, the authentication unit 261 encrypts the second certificate information using the public key included in the first electronic certificate. Subsequently, the authentication unit 261 transmits the encrypted second certificate information to the authentication holding device 100.

Further, the authentication unit 261 receives the encrypted first registration request information and proximity session ID. When receiving the encrypted first registration request information and proximity session ID, the authentication unit 261 decrypts the encrypted first registration request information and proximity session ID using the secret key held by the information processing device 200. When decrypting the first registration request information and the proximity session ID, the authentication unit 261 registers the proximity session ID in the host device in response to the first registration request information.

Further, the authentication unit 261 receives the encrypted first pairing authentication request information and proximity session ID from the authentication holding device 100. When receiving the encrypted first pairing authentication request information and proximity session ID, the authentication unit 261 decrypts the encrypted first pairing authentication request information and proximity session ID using the secret key held by the information processing device 200. When decrypting the first pairing authentication request information and the proximity session ID, the authentication unit 261 performs the pairing authentication of the authentication holding device 100 in response to the first pairing authentication request information. Specifically, the authentication unit 261 performs the pairing authentication of the authentication holding device 100 by collating the proximity session ID received from the authentication holding device 100 with the proximity session ID registered in the information processing device 200. For example, when the proximity session ID received from the authentication holding device 100 matches the proximity session ID registered in the information processing device 200, the authentication unit 261 determines that the authentication holding device 100 is a device that is reliable as a communication partner (that is, the pairing authentication of the authentication holding device 100 is successful).

Further, when performing the pairing authentication of the authentication holding device 100, the authentication unit 261 encrypts information indicating an authentication result of the pairing authentication using the public key included in the first electronic certificate. Subsequently, the authentication unit 261 transmits the encrypted information indicating an authentication result of the pairing authentication to the authentication holding device 100.

Further, in a case where the authentication unit 261 determines that the pairing authentication of the authentication holding device 100 is successful, the second pairing authentication request information and the proximity session ID held by the information processing device 200 are encrypted using the public key included in the first electronic certificate. Subsequently, the authentication unit 261 transmits the encrypted second pairing authentication request information and proximity session ID to the authentication holding device 100.

Further, the authentication unit 261 receives the encrypted second registration request information and user ID. When receiving the encrypted second registration request information and user ID, the authentication unit 261 decrypts the encrypted second registration request information and user ID using the secret key held by the information processing device 200. When decrypting the second registration request information and the user ID, the authentication unit 261 registers the user ID in the information processing device 200 in response to the second registration request information.

Further, the authentication unit 261 receives the encrypted first owned device authentication request information and user ID from the authentication holding device 100. When receiving the encrypted first owned device authentication request information and user ID, the authentication unit 261 decrypts the encrypted first owned device authentication request information and user ID by using the secret key held by the information processing device 200. When decrypting the first owned device authentication request information and the user ID, the authentication unit 261 performs the owned device authentication of the authentication holding device 100 in response to the first owned device authentication request information. Specifically, the authentication unit 261 performs the owned device authentication of the authentication holding device 100 by collating the user ID received from the authentication holding device 100 with the user ID registered in the information processing device 200. For example, when the user ID received from the authentication holding device 100 matches the user ID registered in the information processing device 200, the authentication unit 261 determines that the authentication holding device 100 is a device that is reliable as a communication partner (that is, the owned device authentication of the authentication holding device 100 is successful).

Further, when performing the owned device authentication of the authentication holding device 100, the authentication unit 261 encrypts information indicating an authentication result of the owned device authentication using the public key included in the first electronic certificate. Subsequently, the authentication unit 261 transmits the encrypted information indicating an authentication result of the owned device authentication to the authentication holding device 100.

Further, in a case where it is determined that the owned device authentication of the authentication holding device 100 is successful, the authentication unit 261 encrypts the second owned device authentication request information and the user ID held by the information processing device 200 using the public key included in the first electronic certificate. Subsequently, the authentication unit 261 transmits the encrypted second owned device authentication request information and user ID to the authentication holding device 100.

Further, the authentication unit 261 receives an authentication result of the encrypted owned device authentication from the authentication holding device 100. When receiving the authentication result of the encrypted owned device authentication, the authentication unit 261 decrypts the authentication result of the encrypted owned device authentication using the secret key held by the information processing device 200. When decrypting the authentication result of the owned device authentication, the authentication unit 261 acquires the authentication result of the owned device authentication.

When the authentication result of the owned device authentication of the information processing device 200 acquired by the authentication unit 261 is successful, the estimation unit 262 estimates the inter-device distance. Specifically, the estimation unit 262 estimates the inter-device distance on the basis of the sensor information acquired from the distance measuring sensor included in the sensor unit 230.

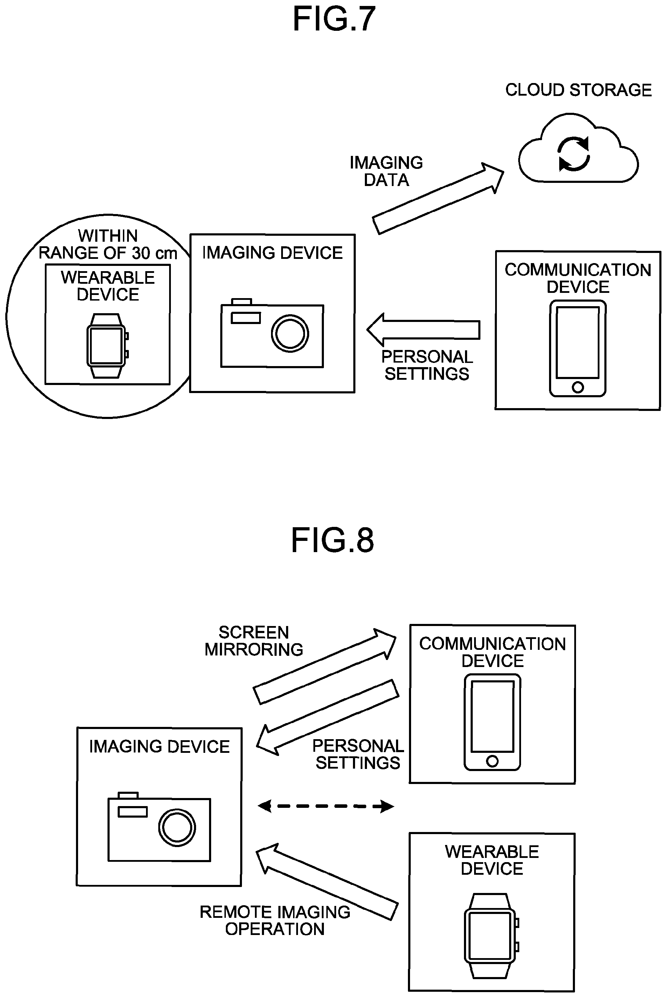

The operation execution unit 263 executes an operation depending on the inter-device distance estimated by the estimation unit 262. For example, the operation execution unit 263 executes a predetermined operation depending on the inter-device distance. For example, the operation execution unit 263 executes an operation depending on the personal setting set in advance by the user. Note that a specific example of the operation executed by the operation execution unit 263 will be described with reference to FIGS. 7 to 21 described later.

### [5. Use case]

Next, a use case using the information processing system according to the embodiment of the present disclosure will be described with reference to FIGS. 7 to 21.

FIG. 7 is a diagram for describing a use case in a case where the information processing system according to the embodiment of the present disclosure includes an imaging device. A wearable device (such as a smart watch) illustrated in FIG. 7 corresponds to the authentication holding device 100 described above. Further, the wearable device is a wearable device registered in the imaging device. Furthermore, the imaging device (camera, video camera, or the like) illustrated in FIG. 7 corresponds to the information processing device 200 described above. The imaging device receives personal settings of the user from a communication device (smartphone, tablet, or the like) in advance. Further, in FIG. 7, the authentication function of each device is enabled. In FIG. 7, the proximity authentication, the pairing authentication, and the owned device authentication are completed in advance between the wearable device and the imaging device. That is, in FIG. 7, the wearable device and the imaging device are in a pairing state.

In FIG. 7, the imaging device performs automatic upload of imaging data and automatic deletion of local data depending on the inter-device distance as predetermined operations. Specifically, in a case where the inter-device distance between the wearable device and the imaging device is 0 to 30 cm, the imaging device performs imaging depending on the operation of the user. When performing imaging, the imaging device uploads imaging data to a cloud storage via a cellular network of the communication device. Further, when performing imaging, the imaging device also stores the imaging data in a local storage of the imaging device. The user moves the wearable device and the imaging device away from each other by 5 m or more to cancel the pairing state between the wearable device and the imaging device. When the pairing state is released, the imaging device deletes the imaging data in the local storage of the imaging device.

In FIG. 7, the imaging device performs remote lock depending on the inter-device distance as a predetermined operation. Specifically, when the inter-device distance between the wearable device and the imaging device is 30 cm to 5 m, the imaging device locks the imaging device and disables the use of the imaging device.

FIG. 8 is a diagram for describing a use case in a case where the information processing system according to the embodiment of the present disclosure includes an imaging device. A communication device and a wearable device illustrated in FIG. 8 correspond to the authentication holding device 100 described above. Further, the imaging device illustrated in FIG. 8 corresponds to the information processing device 200 described above. The imaging device receives personal settings of the user from the communication device in advance. Further, in FIG. 8, the authentication function of each device is enabled. Furthermore, in FIG. 8, the proximity authentication, the pairing authentication, and the owned device authentication are completed in advance between the wearable device and the imaging device and between the communication device and the imaging device. That is, in FIG. 8, the wearable device and the imaging device are in a pairing state. Further, the communication device and the imaging device are in a pairing state.

In FIG. 8, the imaging device performs remote imaging depending on the inter-device distance as a predetermined operation. Specifically, when an inter-device distance between the wearable device and the imaging device is 3 to 5 m, the wearable device displays a remote control button on a screen. The imaging device performs imaging when the remote control button is selected by the user.

Further, in FIG. 8, the imaging device performs screen mirroring depending on the inter-device distance as a predetermined operation. Specifically, when the inter-device distance between the communication device and the imaging device is 3 to 5 m, the imaging device mirrors the display screen of the imaging device on the screen of the communication device.

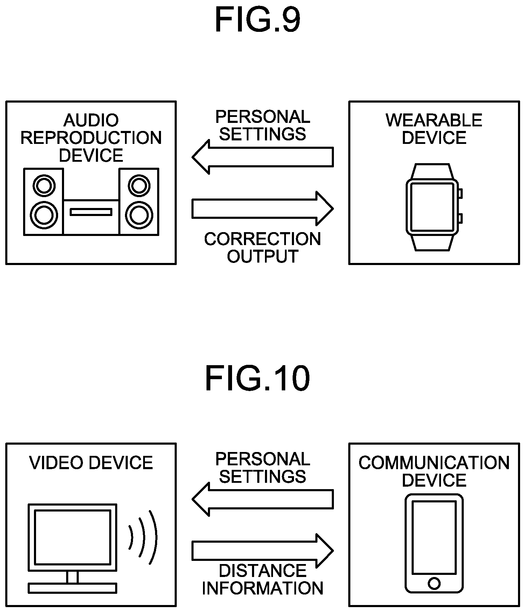

FIG. 9 is a diagram for describing a use case in a case where the information processing system according to the embodiment of the present disclosure includes an audio reproduction device. A wearable device (such as a smart watch) illustrated in FIG. 9 corresponds to the authentication holding device 100 described above. Further, the audio reproduction device (excluding earphones and the like) illustrated in FIG. 9 corresponds to the information processing device 200 described above. The audio reproduction device receives personal settings of the user related to an equalizer or the like from a wearable device in advance. Further, in FIG. 9, the authentication function of each device is enabled. Furthermore, in FIG. 9, the proximity authentication, the pairing authentication, and the owned device authentication are completed in advance between the wearable device and the audio reproduction device. That is, in FIG. 9, the wearable device and the audio reproduction device are in a pairing state.

In FIG. 9, the audio reproduction device performs sound output control depending on the inter-device distance as a predetermined operation. Specifically, in a case where the inter-device distance between the wearable device and the audio reproduction device is 0 m to 5 m, the audio reproduction device controls the output of the sound in such a manner that the sweet spot of the sound is located at the position of the wearable device.

FIG. 10 is a diagram for describing a use case in a case where the information processing system according to the embodiment of the present disclosure includes a video device. A communication device (such as a smartphone) illustrated in FIG. 10 corresponds to the authentication holding device 100 described above. Further, a video device (such as a television having a communication function) illustrated in FIG. 10 corresponds to the information processing device 200 described above. The video device receives personal settings of a user such as account information of a video distribution service from the communication device in advance. Further, in FIG. 10, the authentication function of each device is enabled. Further, in FIG. 10, the proximity authentication, the pairing authentication, and the owned device authentication are completed in advance between the communication device and the video device. That is, in FIG. 10, the communication device and the video device are in a pairing state.

In FIG. 10, the video device reflects a personal profile in the video distribution service depending on the inter-device distance as the predetermined operation. Specifically, when the inter-device distance between the communication device and the video device is 0 m to 5 m, the video device activates the video distribution service on the video device. Further, in a case where the video device activates the video distribution service, the login with the account associated with the communication device is completed.

Further, in FIG. 10, the video device adjusts the illuminance of the screen depending on the inter-device distance as a predetermined operation. Specifically, when the inter-device distance between the communication device and the video device is 0 m to 5 m, the video device changes the illuminance of the screen of the video device to illuminance suitable for the position of the communication device.

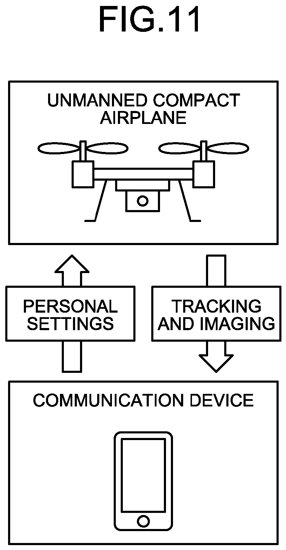

FIG. 11 is a diagram for describing a use case in a case where the information processing system according to the embodiment of the present disclosure includes an unmanned small aircraft for image capturing. A communication device (such as a smartphone) illustrated in FIG. 11 corresponds to the authentication holding device 100 described above. Further, an unmanned small aircraft (such as a drone having an imaging function) illustrated in FIG. 11 corresponds to the above-described information processing device 200. The unmanned small aircraft receives personal settings of a user such as a flight route from the communication device in advance. Further, in FIG. 11, the authentication function of each device is enabled. Furthermore, in FIG. 11, the proximity authentication, the pairing authentication, and the owned device authentication are completed in advance between the communication device and the unmanned small aircraft. That is, in FIG. 11, the communication device and the unmanned small aircraft are in a pairing state.

In FIG. 11, the unmanned small aircraft performs tracking of an imaging object depending on the inter-device distance as a predetermined operation. Specifically, when an inter-device distance between the communication device and the unmanned small aircraft is 0 m to 5 m, the communication device instructs the unmanned small aircraft to fly. The unmanned small aircraft performs aerial image capturing while supplementing the position of the communication device.

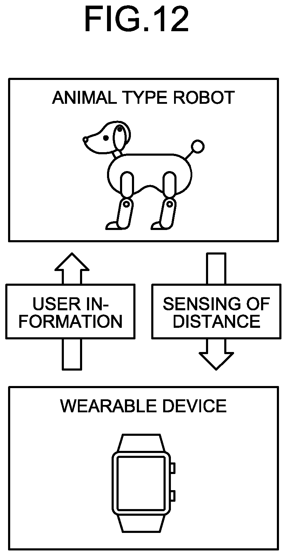

FIG. 12 is a diagram for describing a use case in a case where the information processing system according to the embodiment of the present disclosure includes an animal-type robot. A wearable device (such as a smart watch) illustrated in FIG. 12 corresponds to the authentication holding device 100 described above. Further, the wearable device is a wearable device registered in the animal-type robot. Furthermore, the animal-type robot (such as a robot having a communication function) illustrated in FIG. 12 corresponds to the information processing device 200 described above. The animal-type robot receives, from the wearable device in advance, personal settings of the user regarding the behavior of the robot or the like depending on the inter-device distance. Further, in FIG. 12, the authentication function of each device is enabled. Furthermore, in FIG. 12, the proximity authentication, the pairing authentication, and the owned device authentication are completed in advance between the wearable device and the animal-type robot. That is, in FIG. 12, the wearable device and the animal-type robot are in a pairing state.

In FIG. 12, the animal-type robot executes an action corresponding to the inter-device distance as a predetermined operation. Specifically, when the inter-device distance between the wearable device and the animal-type robot is 0 m to 5 m, the animal-type robot performs an action depending on the position of the wearable device. For example, the animal-type robot moves to a room where the user is. Further, when the user is within 3 m, the animal-type robot finishes the break and starts to actively act.

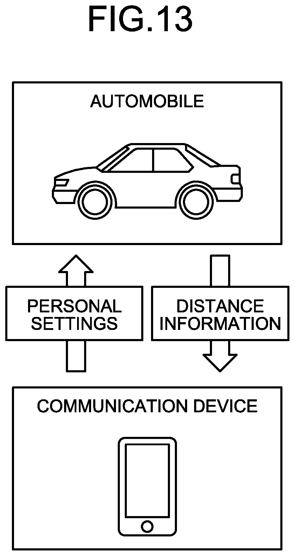

FIG. 13 is a diagram for describing a use case in a case where the information processing system according to the embodiment of the present disclosure includes an automobile. A communication device (such as a smartphone) illustrated in FIG. 13 corresponds to the authentication holding device 100 described above. Further, the automobile illustrated in FIG. 13 corresponds to the information processing device 200 described above. The automobile receives personal settings of the user such as registration point information and a music playlist from the communication device in advance. Further, in FIG. 13, the authentication function of each device is enabled. In FIG. 13, the proximity authentication, the pairing authentication, and the owned device authentication are completed in advance between the communication device and the automobile. That is, in FIG. 13, the communication device and the automobile are in a pairing state.

In FIG. 13, as a predetermined operation, an automobile performs locking or opens or closes a door depending on an inter-device distance. Specifically, when the inter-device distance between the communication device and the automobile is 0 m to 5 m, the user carrying the communication device approaches the automobile. When an approach of the communication device is detected, the automobile automatically opens and closes the door depending on personal setting. Further, when the automobile detects that the user carrying the communication device is approaching from behind the automobile, the automobile automatically opens and closes the trunk depending on the personal setting. Furthermore, when the automobile detects that the user carrying the communication device is approaching from the driver's seat side of the automobile, the automobile automatically opens and closes the door depending on the personal setting.

Further, in FIG. 13, the automobile outputs personalized content depending on the inter-device distance as a predetermined operation. Specifically, when the inter-device distance between the communication device and the automobile is 0 m to 1 m, the automobile outputs navigation information (such as a home address) and music playlist information based on user information associated with the communication device.

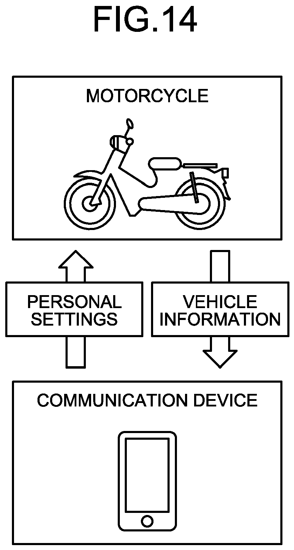

FIG. 14 is a diagram for describing a use case in a case where the information processing system according to the embodiment of the present disclosure includes a motorcycle. A communication device (such as a smartphone) illustrated in FIG. 14 corresponds to the authentication holding device 100 described above. Further, a motorcycle (gasoline cars, electric cars, electric kickboards, or the like) illustrated in FIG. 14 corresponds to the information processing device 200 described above. The motorcycle receives personal settings of the user from the communication device in advance. Further, in FIG. 14, the authentication function of each device is enabled. In FIG. 14, the proximity authentication, the pairing authentication, and the owned device authentication are completed in advance between the communication device and the motorcycle. That is, in FIG. 14, the communication device and the motorcycle are in a pairing state.

In FIG. 14, the motorcycle locks the motorcycle depending on the inter-device distance as a predetermined operation. Specifically, when the inter-device distance between the communication device and the motorcycle is equal to or more than 1 m, the motorcycle locks the handlebar and disables a start switch of the engine.

Further, in FIG. 14, the motorcycle unlocks the motorcycle depending on the inter-device distance as a predetermined operation. Specifically, when the inter-device distance between the communication device and the motorcycle is 0 m to 1 m, the motorcycle unlocks the handlebar and activates the start switch of the engine.

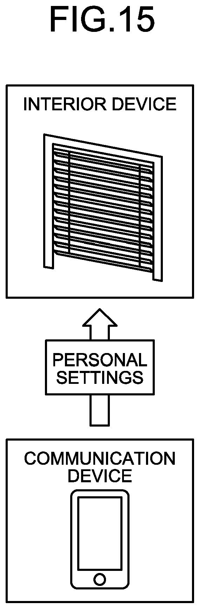

FIG. 15 is a diagram for describing a use case in a case where the information processing system according to the embodiment of the present disclosure includes an interior device. A communication device (such as a smartphone) illustrated in FIG. 15 corresponds to the authentication holding device 100 described above. Further, an interior device (a blind having a communication function, or the like) illustrated in FIG. 15 corresponds to the information processing device 200 described above. The interior device receives personal settings of the user such as opening the blind in the pairing state from the communication device in advance. Further, in FIG. 15, the authentication function of each device is enabled. Furthermore, in FIG. 15, the proximity authentication, the pairing authentication, and the owned device authentication are completed in advance between the communication device and the interior device. That is, in FIG. 15, the communication device and the interior device are in a pairing state.

In FIG. 15, the interior device adjusts the illuminance depending on the inter-device distance as a predetermined operation. Specifically, in a case where the inter-device distance between the communication device and the interior device is 0 m to 5 m, the interior device executes an action depending on personal setting. For example, the interior device opens the blind depending on personal setting of opening the blind in the pairing state. Further, the interior device closes the blind depending on the personal setting of closing the blind when the pairing state is released.

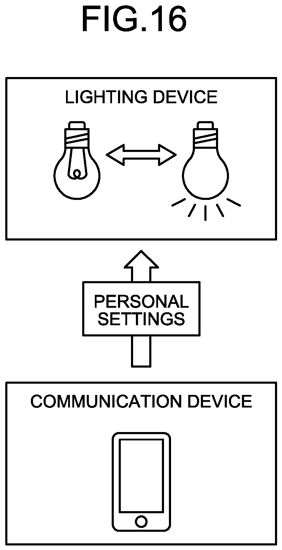

FIG. 16 is a diagram for describing a use case in a case where the information processing system according to the embodiment of the present disclosure includes a lighting device. A communication device (such as a smartphone) illustrated in FIG. 16 corresponds to the authentication holding device 100 described above. Further, the lighting device (ceiling light, indoor lighting, and the like having a communication function) illustrated in FIG. 16 corresponds to the information processing device 200 described above. The lighting device receives personal settings of the user such as user's preferred brightness and brightness for each time slot from the communication device in advance. Further, in FIG. 16, the authentication function of each device is enabled. Furthermore, in FIG. 16, the proximity authentication, the pairing authentication, and the owned device authentication are completed in advance between the communication device and the lighting device. That is, in FIG. 16, the communication device and the lighting device are in a pairing state.

In FIG. 16, the lighting device adjusts the illuminance depending on the inter-device distance as a predetermined operation. Specifically, when the inter-device distance between the communication device and the lighting device is 0 m to 5 m, the lighting device controls the lighting device so as to have brightness depending on personal setting.

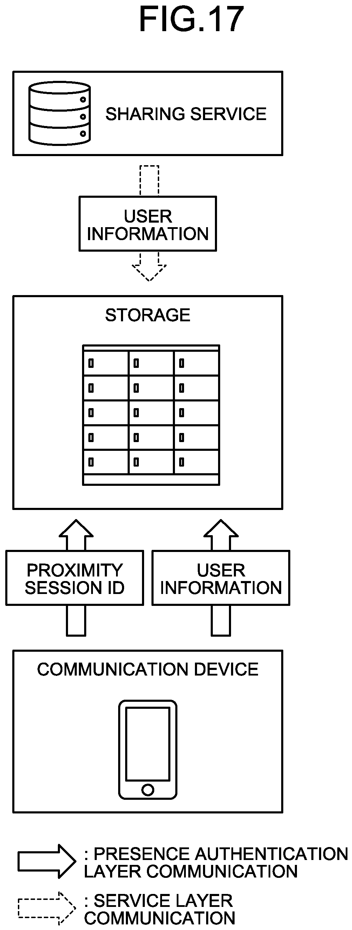

FIG. 17 is a diagram for describing a use case in a case where the information processing system according to the embodiment of the present disclosure includes a storage. A communication device (such as a smartphone) illustrated in FIG. 17 corresponds to the authentication holding device 100 described above. Further, a storage (such as a locker having a communication function) illustrated in FIG. 17 corresponds to the information processing device 200 described above. The storage receives user information related to a user of a sharing service from the sharing service in advance, and registers the user information in the host device. Further, in FIG. 17, the authentication function of each device is enabled.

In FIG. 17, the storage notifies the user of the location of the locker used by the user from among the plurality of lockers included in the storage as a predetermined operation. Specifically, when the inter-device distance between the communication device and the storage device is 0 m to 5 m, the communication device and the storage perform the proximity authentication. When the communication device and the storage share the proximity session ID and the communication device and the storage are in the proximity session state, the communication device transmits the user information to the storage. When receiving the user information from the communication device, the storage turns on a lamp of the place of the locker used by the user on the basis of the user information received from the communication device and the user information registered in the host device, unlocks the key of the locker, and opens the door of the locker.

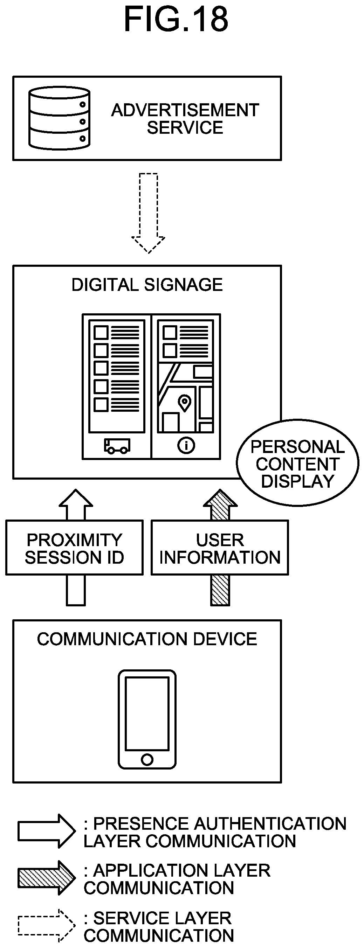

FIG. 18 is a diagram for describing a use case where the information processing system according to the embodiment of the present disclosure includes a digital signage. A communication device (such as a smartphone) illustrated in FIG. 18 corresponds to the authentication holding device 100 described above. Further, the digital signage illustrated in FIG. 18 corresponds to the information processing device 200 described above. Furthermore, the digital signage acquires advertisement content from an advertisement service and displays the advertisement content on a screen of the digital signage. Further, in FIG. 18, the authentication function of each device is enabled.

In FIG. 18, the digital signage displays advertisement content personalized to the user as a predetermined operation. Specifically, when the inter-device distance between the communication device and the digital signage is 0 m to 5 m, the communication device and the digital signage perform proximity authentication. If the communication device and the digital signage share a proximity session ID and the communication device and the digital signage are in a proximity session state, the communication device sends the user information to the digital signage. When receiving the user information from the communication device, the digital signage acquires advertisement content personalized to the user from the advertisement service on the basis of the user information, and displays the acquired advertisement content on the screen of the digital signage.

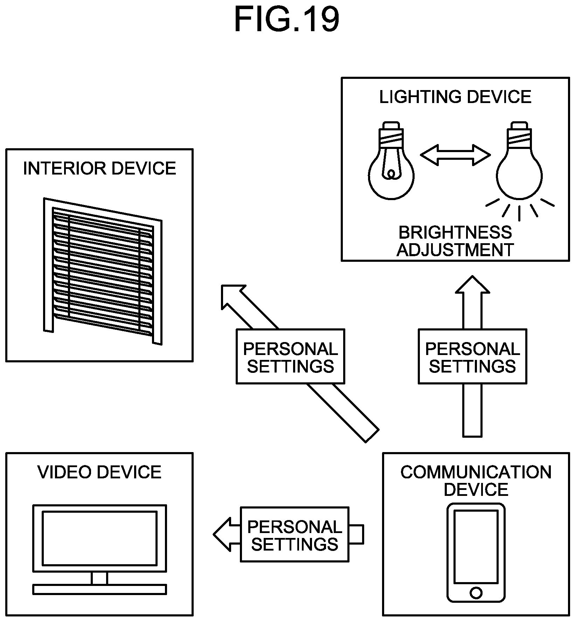

FIG. 19 is a diagram for describing a use case in a case where the information processing system according to the embodiment of the present disclosure includes a plurality of information processing devices. A communication device (such as a smartphone) illustrated in FIG. 19 corresponds to the authentication holding device 100 described above. Further, a lighting device, an interior device, and a video device illustrated in FIG. 19 correspond to the information processing device 200 described above. Each of the lighting device, the interior device, and the video device receives personal settings of the user from the communication device in advance. Further, in FIG. 19, the authentication function of each device is enabled. In FIG. 19, the proximity authentication, the pairing authentication, and the owned device authentication are completed in advance between the communication device and the lighting device, between the communication device and the interior device, and between the communication device and the video device. That is, in FIG. 19, the communication device and the lighting device, the communication device and the interior device, and the communication device and the video device are in a pairing state.

In FIG. 19, a lighting device, an interior device, and a video device adjust illuminance by cooperation of devices as predetermined operations. Specifically, when each of the inter-device distances between the communication device and the lighting device, between the communication device and the interior device, and between the communication device and the video device is 0 m to 5 m, the video device changes the illuminance of the screen of the video device to illuminance suitable for the position of the communication device. Subsequently, the video device transmits illuminance information related to illuminance of the screen of the video device and information related to brightness of a projected video to the communication device. The communication device transmits an instruction based on the personal setting of the user to each of the lighting device and the interior device on the basis of the information received from the video device. For example, when the illuminance of the video device is dark, the communication device transmits an instruction to brighten the lighting device to the lighting device. Further, the communication device transmits an instruction to close the blind to the interior device as the lighting device is brightened. The lighting device adjusts the illuminance of the lighting device depending on an instruction from the communication device. The interior device executes an action depending on an instruction from the communication device.

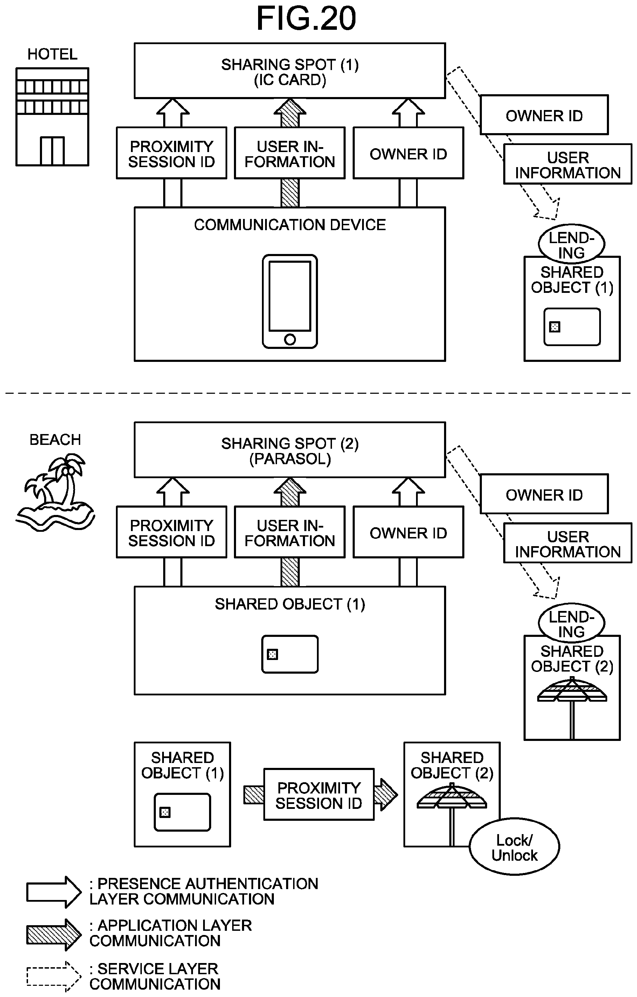

FIG. 20 is a diagram for describing a use case in a case where the information processing system according to the embodiment of the present disclosure is applied to a sharing service. In FIG. 20, a sharing spot (hereinafter, referred to as a sharing spot 1) for lending an IC card, a sharing spot (hereinafter, referred to as a sharing spot 2) for lending a parasol, an IC card (hereinafter, referred to as a shared object 1) lent from the sharing spot 1, a parasol (hereinafter, referred to as a shared object 2) lent from the sharing spot 2, and a presence authentication function of each device which is a communication device are enabled. Further, in the following description, it is assumed that the shared object 1 can be the authentication holding device 100 described above, that the shared object 2 can be the information processing device 200 described above, that the sharing spot 1 and the sharing spot 2 are operated under the control of the same sharing service, and that registration of user information of users of the sharing service is completed.

In FIG. 20, in a case where the inter-device distance between the communication device and the sharing spot 1 is 0 m to 5 m, the communication device and the sharing spot 1 perform proximity authentication. When the communication device and the sharing spot 1 share the proximity session ID, and the communication device and the sharing spot 1 are in the proximity session state, the communication device transmits user information of the sharing service to the sharing spot 1. The sharing spot 1 performs the pairing authentication of the communication device on the basis of the user information received from the communication device. Further, the sharing spot 1 shifts to the pairing mode. The communication device and the sharing spot 1 share the user ID, and the communication device and the sharing spot 1 are in a pairing state. Further, in a case where the inter-device distance between the communication device and the sharing spot 1 is 0 m to 1 m, the sharing spot 1 lends the shared object 1 to the user. At this time, the user ID and the user information of the sharing service are stored in the shared object 1.

Further, in FIG. 20, the shared object 1 and the sharing spot 2 perform the pairing authentication by a method similar to the method for lending the shared object 1 from the sharing spot 1 described above, and the sharing spot 2 lends the shared object 2 to the user.

Further, in FIG. 20, in a case where the inter-device distance between the shared object 1 and the shared object 2 is 0 m to 5 m, the shared object 1 and the shared object 2 perform proximity authentication. The shared object 1 and the shared object 2 share a proximity session ID, and the shared object 1 and the shared object 2 are in a proximity session state. At this time, when the shared object 1 and the shared object 2 hold the same user ID, the parasol that is the shared object 2 can be opened. On the other hand, when the shared object 1 and the shared object 2 do not hold the same user ID, the parasol that is the shared object 2 is in an unopenable (locked) state.

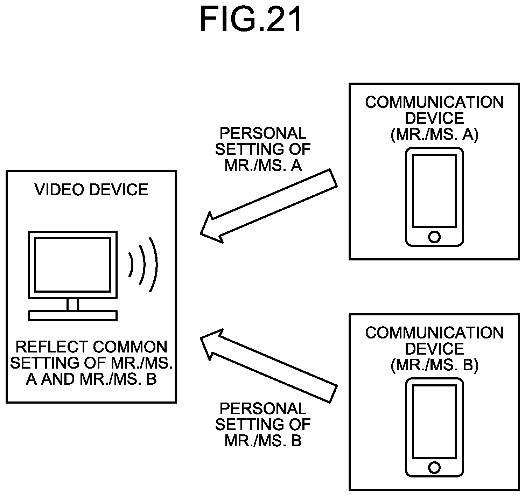

FIG. 21 is a diagram for describing a use case in a case where the information processing system according to the embodiment of the present disclosure includes a plurality of authentication holding devices. The two communication devices (Mr./Ms. A) and (Mr./Ms. B) illustrated in FIG. 21 correspond to the authentication holding device 100 described above. Here, Mr./Ms. A and Mr./Ms. B are different users. Further, the communication device (Mr./Ms. A) is a communication device of Mr./Ms. A registered in the video device. Furthermore, the communication device (Mr./Ms. B) is a communication device of Mr./Ms. B registered in the video device. Further, the video device illustrated in FIG. 21 corresponds to the information processing device 200 described above. The video device receives respective personal settings of Mr./Ms. A and Mr./Ms. B from respective communication devices of Mr./Ms. A and Mr./Ms. B in advance. Further, in FIG. 21, the authentication function of each device is enabled. Furthermore, in FIG. 21, the proximity authentication, the pairing authentication, and the owned device authentication are completed in advance between the communication device (Mr./Ms. A) and the video device and between the communication device (Mr./Ms. B) and the video device. That is, in FIG. 21, the communication device (Mr./Ms. A) and the video device are in a pairing state, and the communication device (Mr./Ms. B) and the video device are in a pairing state.

In FIG. 21, the video device reflects, as the predetermined operation, settings of sharing between Mr./Ms. A and Mr./Ms. B, which are different users depending on the inter-device distance. Specifically, when the inter-device distance between the communication device (Mr./Ms. A) and the video device and the inter-device distance between the communication device (Mr./Ms. B) and the video device are both 0 m to 5 m, the video device applies the sharing setting between Mr./Ms. A and Mr./Ms. B to the video device.

### [6. Effects according to present disclosure]

As described above, the information processing device (for example, the information processing device 200 in the embodiment) according to the present disclosure includes the communication unit 210 and the authentication unit 261. The communication unit 210 receives, in a case where the inter-device distance between the authentication holding device 100 that holds authentication information used for personal authentication of the user and the information processing device 200 is equal to or less than a predetermined distance, first authentication request information related to an authentication request of the authentication holding device 100 transmitted from the authentication holding device 100 and the authentication information. The authentication unit 261 performs authentication of the authentication holding device 100 based on the authentication information in response to the first authentication request information received by the communication unit 210.

Thus, the information processing device 200 can seamlessly perform the device-to-device authentication for confirming that the authentication holding device 100 and the information processing device 200 are devices that are reliable to each other as communication partners using the inter-device distance between the authentication holding device 100 and the information processing device 200 as a trigger. Further, in a case where the authentication holding device 100 that safely holds the authentication information approaches the information processing device 200, the information processing device 200 can safely implement the device-to-device authentication based on the inter-device distance. Furthermore, in a case where the inter-device distance is equal to or less than the predetermined distance, the information processing device 200 can safely complete the device-to-device authentication between the authentication holding device 100 and the information processing device 200, and can execute the operation depending on the personal setting of the user in an authenticated state. That is, the information processing device 200 can automatically execute an operation depending on the personal settings of the user (for example, a television is turned on with volume or brightness depending on the personal settings of the user, a lighting is turned on with illuminance depending on the personal settings of the user, or the like) only by the user having the authentication holding device 100 approaching the television or the lighting of the information processing device 200, for example. Therefore, the information processing device 200 is capable of safely implementing a human-centric system that automatically operates in accordance with the user having the authentication holding device 100.

Further, the authentication holding device 100 transmits the authentication information to the information processing device 200 together with the registration request information related to a registration request of the authentication information in a case where it is determined that the personal authentication of the user is successful on the basis of an authentication result of the personal authentication of the user. The communication unit 210 receives the authentication information together with the registration request information from the authentication holding device 100. The authentication unit 261 registers the authentication information received together with the registration request information by the communication unit 210 in the information processing device 200 in response to the registration request information received by the communication unit 210, and performs authentication of the authentication holding device 100 on the basis of the authentication information registered in the information processing device 200.

Thus, the information processing device 200 performs the device-to-device authentication in a case where the personal authentication of the user in the authentication holding device 100 is successful and the user confirms that the authentication holding device 100 is a reliable device, so that the device-to-device authentication can be safely implemented.

Further, the authentication unit 261 performs authentication of the authentication holding device 100 by collating the authentication information received together with the first authentication request information by the communication unit 210 with the authentication information registered in the information processing device 200.

Thus, the information processing device 200 performs device-to-device authentication on the basis of the authentication information acquired from the authentication holding device 100 that securely holds the authentication information, so that device-to-device authentication can be reliably implemented.

Further, the communication unit 210 transmits the authentication information registered in the information processing device 200 to the authentication holding device 100 together with the second authentication request information related to the authentication request of the information processing device 200. The authentication holding device 100 receives the authentication information together with the second authentication request information from the information processing device 200, and performs authentication of the information processing device 200 by collating the authentication information received together with the second authentication request information with the authentication information held by the authentication holding device 100 in response to the received second authentication request information.

Thus, the information processing device 200 can cause the authentication holding device 100 that has been confirmed to be a reliable device by the user to perform authentication of the host device, so that the authentication of the host device can be safely implemented.

Further, the authentication holding device 100 notifies the information processing device 200 of the authentication result of the authentication of the information processing device 200 performed by the authentication holding device 100. The communication unit 210 receives information related to the authentication result of the authentication of the information processing device 200 from the authentication holding device 100.

Thus, the information processing device 200 can acquire the authentication result of the host device that has been implemented safely from the authentication holding device 100 that has been confirmed to be a reliable device by the user, so that the device-to-device authentication can be implemented safely.

Further, the information processing device 200 further includes the operation execution unit 263. The operation execution unit 263 executes a predetermined operation on the basis of the authentication result of the authentication of the authentication holding device 100 performed by the authentication unit 261.

Thus, the information processing device 200 can safely complete the device-to-device authentication between the authentication holding device 100 and the information processing device 200, and execute the operation depending on the personal setting of the user in the authenticated state. Therefore, the information processing device 200 can safely implement a human-centric system that automatically operates in accordance with the user having the authentication holding device 100.

Further, the information processing device 200 further includes the estimation unit 262. The estimation unit 262 estimates an inter-device distance between the authentication holding device 100 and the information processing device 200. The operation execution unit 263 executes an operation depending on the inter-device distance estimated by the estimation unit 262.

Thus, the information processing device 200 can automatically execute an operation depending on the inter-device distance. Therefore, the information processing device 200 can improve the convenience of the human-centric system that automatically operates in accordance with the user having the authentication holding device 100.

Further, the communication unit 210 notifies the authentication holding device 100 of the authentication result of the authentication of the authentication holding device 100 performed by the authentication unit 261.

Thus, the information processing device 200 can reliably implement the device-to-device authentication by notifying the authentication result of the authentication of the authentication holding device 100 to the authentication holding device 100.

Further, the communication unit 210 receives, from the authentication holding device 100, first certificate information indicating that the authentication holding device 100 includes a first authentication function for performing authentication of the information processing device 200. The authentication unit 261 confirms that the authentication holding device 100 includes the first authentication function on the basis of the first certificate information received by the communication unit 210.

Thus, when confirming that the authentication holding device 100 includes the authentication function for mutually guaranteeing validity of connection between devices, the information processing device 200 can perform the device-to-device authentication, so that the device-to-device authentication can be implemented safely and reliably.

Further, the communication unit 210 receives, from the authentication holding device 100, confirmation request information related to a confirmation request for that the information processing device 200 includes a second authentication function for performing authentication of the authentication holding device 100, and transmits second certificate information indicating that the information processing device 200 includes the second authentication function to the authentication holding device 100 in response to the received confirmation request information. The authentication holding device 100 receives the second certificate information from the information processing device 200, and confirms that the information processing device 200 includes the second authentication function on the basis of the received second certificate information.

Thus, when confirming that the authentication holding device 100 and the information processing device 200 includes the authentication function for mutually guaranteeing validity of connection between devices, the information processing device 200 can perform the device-to-device authentication, so that the device-to-device authentication can be implemented safely and reliably.

Further, when it is confirmed that the information processing device 200 includes the second authentication function, the authentication holding device 100 generates proximity session identification information capable of identifying a proximity session state in which an inter-device distance between the authentication holding device 100 including a first authentication function for performing authentication of the information processing device 200 and the information processing device 200 including the second authentication function is equal to or less than a predetermined distance, and transmits the generated proximity session identification information to the information processing device 200 together with registration request information related to a registration request of the proximity session identification information. The communication unit 210 receives the proximity session identification information from the authentication holding device 100 together with the registration request information related to the registration request of the proximity session identification information. The authentication unit 261 registers the proximity session identification information received by the communication unit 210 in the information processing device 200 in response to the registration request information received by the communication unit 210, and performs the pairing authentication of the authentication holding device 100 for confirming that the authentication holding device 100 is a device that is reliable as a communication partner on the basis of the proximity session identification information registered in the information processing device 200.

Thus, the information processing device 200 can perform the device-to-device authentication in a state in which the proximity authentication that ensures that the authentication holding device 100 including the authentication function and the information processing device 200 exist at positions close to each other is successful, so that the device-to-device authentication can be safely implemented.

Further, the communication unit 210 receives the proximity session identification information from the authentication holding device 100 together with first pairing authentication request information related to a pairing authentication request of the authentication holding device 100. The authentication unit 261 performs pairing authentication of the authentication holding device 100 by collating the proximity session identification information received together with the first pairing authentication request information by the communication unit 210 with the proximity session identification information registered in the information processing device 200.

In this manner, the information processing device 200 can perform the device-to-device authentication in a state where the proximity authentication is successful, and thus the device-to-device authentication can be implemented safely.

Further, the communication unit 210 transmits the proximity session identification information registered in the information processing device 200 to the authentication holding device 100 together with second pairing authentication request information related to a pairing authentication request of the information processing device 200 for confirming that the information processing device 200 is a device that is reliable as a communication partner. The authentication holding device 100 receives the proximity session identification information together with the second pairing authentication request information from the information processing device 200, and performs pairing authentication of the information processing device 200 by collating the proximity session identification information received together with the second pairing authentication request information with the proximity session identification information held by the authentication holding device 100 in response to the received second pairing authentication request information.

In this manner, the information processing device 200 can perform the device-to-device authentication in a state where the proximity authentication is successful, and thus the device-to-device authentication can be implemented safely.

Further, when it is confirmed that the information processing device 200 is a reliable device as a communication partner on the basis of an authentication result of the pairing authentication, the authentication holding device 100 requests the user to perform personal authentication, and performs the personal authentication by collating personal authentication information input by the user with the authentication information held by the authentication holding device 100.

In this manner, the authentication holding device 100 can cause the user to confirm that the host device is a reliable device by the user's personal authentication, and thus can reliably confirm that the host device is a reliable device.

Further, the communication unit 210 receives the authentication information encrypted using a technique of public key infrastructure (PKI).

Thus, the information processing device 200 can prevent leakage and unauthorized use of the authentication information. Further, the information processing device 200 can prevent leakage and unauthorized use of authentication information, and thus device-to-device authentication can be implemented safely and reliably.

Further, the communication unit 210 receives authentication information that is user identification information capable of identifying the user.

Thus, the information processing device 200 can perform the device-to-device authentication using different user identification information each time the device-to-device authentication is performed by generating different user identification information each time the device-to-device authentication is performed, which is different from a case where the biometric information of the user is used as the authentication information, for example, so that the device-to-device authentication can be implemented safely.

### [7. Hardware configuration]

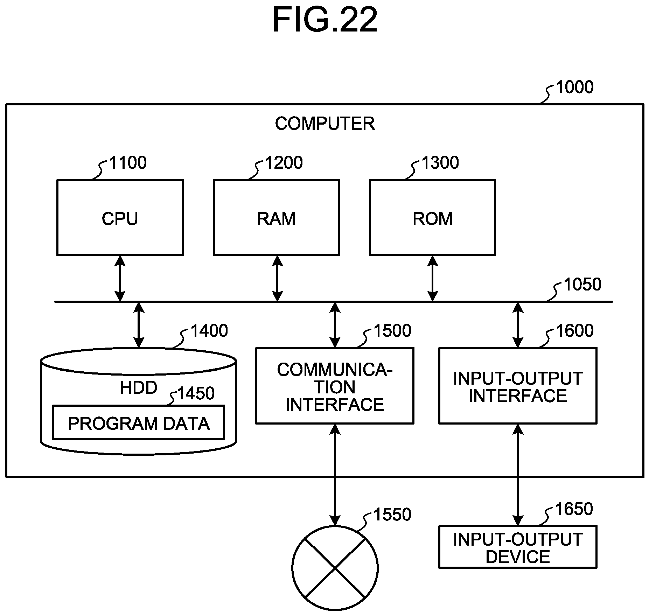

The information processing device (information device) such as the authentication holding device 100 or the information processing device 200 which is the information processing device according to each embodiment described above is implemented by a computer 1000 having a configuration as illustrated in FIG. 22, for example. FIG. 22 is a hardware configuration diagram illustrating an example of the computer 1000 that implements the functions of the information processing device. Hereinafter, the information processing device 200 according to the embodiment will be described as an example. The computer 1000 includes a CPU 1100, a RAM 1200, a read only memory (ROM) 1300, a hard disk drive (HDD) 1400, a communication interface 1500, and an input-output interface 1600. Each unit of the computer 1000 is connected by a bus 1050.

The CPU 1100 operates on the basis of a program stored in the ROM 1300 or the HDD 1400, and controls each unit. For example, the CPU 1100 develops a program stored in the ROM 1300 or the HDD 1400 in the R_AM 1200, and executes processing corresponding to various programs.

The ROM 1300 stores a boot program such as a basic input output system (BIOS) executed by the CPU 1100 when the computer 1000 is activated, a program depending on hardware of the computer 1000, and the like.

The HDD 1400 is a computer-readable recording medium that non-transiently records a program executed by the CPU 1100, data used by such a program, and the like. Specifically, the HDD 1400 is a recording medium that records an information processing program according to the present disclosure as an example of program data 1450.

The communication interface 1500 is an interface for the computer 1000 to connect to an external network 1550 (for example, wireless LAN, Wi-Fi (registered trademark), Bluetooth (registered trademark), or the like). For example, the CPU 1100 receives data from another device or transmits data generated by the CPU 1100 to another device via the communication interface 1500.

The input-output interface 1600 is an interface for connecting an input-output device 1650 and the computer 1000. For example, the CPU 1100 receives data from an input device such as a keyboard and a mouse via the input-output interface 1600. Further, the CPU 1100 transmits data to an output device such as a display, a speaker, or a printer via the input-output interface 1600. Furthermore, the input-output interface 1600 may function as a media interface that reads a program or the like recorded in a predetermined recording medium. The medium is, for example, an optical recording medium such as a digital versatile disc (DVD) or a phase change rewritable disk (PD), a magneto-optical recording medium such as a magneto-optical disk (MO), a tape medium, a magnetic recording medium, a semiconductor memory, or the like.

For example, in a case where the computer 1000 functions as the information processing device 200 according to the embodiment, the CPU 1100 of the computer 1000 implements the functions of the control unit 260 and the like by executing the information processing program loaded on the RAM 1200. Further, the HDD 1400 stores an information processing program according to the present disclosure and data in the storage unit 220. Note that the CPU 1100 reads the program data 1450 from the HDD 1400 and executes the program data 1450, but as another example, these programs may be acquired from another device via the external network 1550.

Note that the present technology can also have the following configurations.
(1) An information processing device comprising:
   a communication unit that receives, in a case where an inter-device distance between an authentication holding device that holds authentication information used for personal authentication of a user and the information processing device is equal to or less than a predetermined distance, first authentication request information related to an authentication request of the authentication holding device transmitted from the authentication holding device and the authentication information; and
   an authentication unit that performs authentication of the authentication holding device based on the authentication information in response to the first authentication request information received by the communication unit.
(2) The information processing device according to (1), wherein
   the authentication holding device
   transmits the authentication information to the information processing device together with registration request information related to a registration request of the authentication information in a case where it is determined that the personal authentication of the user is successful on a basis of an authentication result of the personal authentication of the user,
   the communication unit
   receives the authentication information together with the registration request information from the authentication holding device, and
   the authentication unit
   registers the authentication information received
   together with the registration request information by the communication unit in the information processing device in response to the registration request information received by the communication unit, and authenticates the authentication holding device on a basis of the authentication information registered in the information processing device.
(3) The information processing device according to (2), wherein
   the authentication unit
   performs authentication of the authentication holding device by collating the authentication information received together with the first authentication request information by the communication unit with the authentication information registered in the information processing device.
(4) The information processing device according to (2) or (3), wherein
   the communication unit
   transmits the authentication information registered in the information processing device to the authentication holding device together with second authentication request information related to an authentication request of the information processing device, and
   the authentication holding device
   receives the authentication information together with the second authentication request information from the information processing device, and performs authentication of the information processing device by collating the authentication information received together with the second authentication request information with the authentication information held by the authentication holding device in response to the received second authentication request information.
(5) The information processing device according to (4), wherein
   the authentication holding device
   notifies the information processing device of an authentication result of the authentication of the information processing device performed by the authentication holding device, and
   the communication unit
   receives information related to the authentication result of the authentication of the information processing device from the authentication holding device.
(6) The information processing device according to any one of (1) to (5), further comprising:
   an operation execution unit that executes a predetermined operation on a basis of an authentication result of the authentication of the authentication holding device performed by the authentication unit.
(7) The information processing device according to (6), further comprising:
   an estimation unit that estimates an inter-device distance between the authentication holding device and the information processing device, wherein
   the operation execution unit
   executes the operation depending on the inter-device distance estimated by the estimation unit.
(8) The information processing device according to any one of (1) to (7), wherein
   the communication unit
   notifies the authentication holding device of an authentication result of the authentication of the authentication holding device performed by the authentication unit.
(9) The information processing device according to any one of (1) to (8), wherein
   the communication unit
   receives, from the authentication holding device, first certificate information indicating that the authentication holding device includes a first authentication function for performing authentication of the information processing device, and
   the authentication unit
   confirms that the authentication holding device includes the first authentication function on a basis of the first certificate information received by the communication unit.
(10) The information processing device according to any one of (1) to (9), wherein
   the communication unit
   receives, from the authentication holding device, confirmation request information related to a request for confirmation that the information processing device includes a second authentication function for performing authentication of the authentication holding device, and transmits second certificate information indicating that the information processing device includes the second authentication function to the authentication holding device in response to the received confirmation request information, and
   the authentication holding device
   receives the second certificate information from the information processing device, and confirms that the information processing device includes the second authentication function on a basis of the received second certificate information.
(11) The information processing device according to (10), wherein
   the authentication holding device,
   when it is confirmed that the information processing device includes the second authentication function, generates proximity session identification information capable of identifying a proximity session state in which an inter-device distance between the authentication holding device including a first authentication function for performing authentication of the information processing device and the information processing device including the second authentication function is equal to or less than a predetermined distance, and transmits the generated proximity session identification information to the information processing device together with registration request information regarding a registration request of the proximity session identification information,
   the communication unit
   receives the proximity session identification information from the authentication holding device together with registration request information related to a registration request of the proximity session identification information, and
   the authentication unit
   registers the proximity session identification information received by the communication unit in the information processing device in response to the registration request information received by the communication unit, and performs pairing authentication of the authentication holding device for confirming that the authentication holding device is a device that is reliable as a communication partner on a basis of the proximity session identification information registered in the information processing device.
(12) The information processing device according to (11), wherein
   the communication unit
   receives the proximity session identification information from the authentication holding device together with first pairing authentication request information related to a pairing authentication request of the authentication holding device, and
   the authentication unit
   performs pairing authentication of the authentication holding device by collating the proximity session identification information received together with the first pairing authentication request information by the communication unit with the proximity session identification information registered in the information processing device.
(13) The information processing device according to (12), wherein
   the communication unit
   transmits the proximity session identification information registered in the information processing device to the authentication holding device together with second
   pairing authentication request information related to a pairing authentication request of the information processing device for confirming that the information processing device is a device that is reliable as a communication partner, and
   the authentication holding device
   receives the proximity session identification information together with the second pairing authentication request information from the information processing device, and performs pairing authentication of the information processing device by collating the proximity session identification information received together with the second pairing authentication request information with the proximity session identification information held by the authentication holding device in response to the received second pairing authentication request information.
(14) The information processing device according to (13), wherein
   the authentication holding device,
   when it is confirmed that the information processing device is a reliable device as a communication partner on a basis of an authentication result of the pairing authentication, requests the user to perform personal authentication, and performs the personal authentication by collating personal authentication information input by the user with the authentication information held by the authentication holding device.
(15) The information processing device according to (1), wherein
   the communication unit
   receives the authentication information that is
   encrypted by using a technology of a public key infrastructure (PKI).
(16) The information processing device according to any one of (1) to (15), wherein
   the communication unit
   receives the authentication information that is user identification information capable of identifying the user.
(17) An information processing method performed by an information processing device, the method comprising:
   receiving, in a case where an inter-device distance between an authentication holding device that holds authentication information used for personal authentication of a user and the information processing device is equal to or less than a predetermined distance, first authentication request information related to an authentication request of the authentication holding device transmitted from the authentication holding device and the authentication information; and
   performing authentication of the authentication holding device based on the authentication information in response to the first authentication request information received.
(18) An information processing system comprising: an authentication holding device that holds authentication information used for personal authentication of a user; and an information processing device, wherein
   the authentication holding device
   estimates an inter-device distance between the authentication holding device and the information processing device, and transmits the authentication information to the information processing device together with first authentication request information related to an authentication request of the authentication holding device in a case where the estimated inter-device distance is equal to or less than a predetermined distance, and
   the information processing device
   receives the authentication information from the authentication holding device together with the first authentication request information, and performs authentication of the authentication holding device based on the authentication information in response to the received first authentication request information.
(19) The information processing system according to (18), wherein
   the authentication holding device
   transmits the authentication information to the information processing device together with registration request information related to a registration request of the authentication information in a case where it is determined that the personal authentication of the user is successful on a basis of an authentication result of the personal authentication of the user, and
   the information processing device
   receives the authentication information together with the registration request information from the authentication holding device, registers the authentication information received together with the registration request information in the information processing device in response to the received registration request information, and performs authentication of the authentication holding device by collating the authentication information registered in the information processing device with the authentication information received together with the first authentication request information.
(20) The information processing system according to (19), wherein
   the information processing device
   transmits the authentication information registered in the information processing device to the authentication holding device together with second authentication request information related to an authentication request of the information processing device in a case where the inter-device distance is equal to or less than a predetermined distance, and
   the authentication holding device
   receives the authentication information together with the second authentication request information from the information processing device, and performs authentication of the information processing device by collating the received authentication information with the authentication information held by the authentication holding device in response to the received second authentication request information.

### Reference Signs List

- 1: INFORMATION PROCESSING SYSTEM
- 100: AUTHENTICATION HOLDING DEVICE
- 110: COMMUNICATION UNIT
- 120: STORAGE UNIT
- 130: SENSOR UNIT
- 140: INPUT UNIT
- 150: OUTPUT UNIT
- 160: CONTROL UNIT
- 161: ESTIMATION UNIT
- 162: AUTHENTICATION UNIT
- 163: OPERATION EXECUTION UNIT
- 200: INFORMATION PROCESSING DEVICE
- 210: COMMUNICATION UNIT
- 220: STORAGE UNIT
- 230: SENSOR UNIT
- 240: INPUT UNIT
- 250: OUTPUT UNIT
- 260: CONTROL UNIT
- 261: AUTHENTICATION UNIT
- 262: ESTIMATION UNIT
- 263: OPERATION EXECUTION UNIT

## Claims

1. An information processing device comprising:
a communication unit that receives, in a case where an inter-device distance between an authentication holding device that holds authentication information used for personal authentication of a user and the information processing device is equal to or less than a predetermined distance, first authentication request information related to an authentication request of the authentication holding device transmitted from the authentication holding device and the authentication information; and
an authentication unit that performs authentication of the authentication holding device based on the authentication information in response to the first authentication request information received by the communication unit.

2. The information processing device according to claim 1, wherein
the authentication holding device
transmits the authentication information to the information processing device together with registration request information related to a registration request of the authentication information in a case where it is determined that the personal authentication of the user is successful on a basis of an authentication result of the personal authentication of the user,
the communication unit
receives the authentication information together with the registration request information from the authentication holding device, and
the authentication unit
registers the authentication information received together with the registration request information by the communication unit in the information processing device in response to the registration request information received by the communication unit, and authenticates the authentication holding device on a basis of the authentication information registered in the information processing device.

3. The information processing device according to claim 2, wherein
the authentication unit
performs authentication of the authentication holding device by collating the authentication information received together with the first authentication request information by the communication unit with the authentication information registered in the information processing device.

4. The information processing device according to claim 2, wherein
the communication unit
transmits the authentication information registered in the information processing device to the authentication holding device together with second authentication request information related to an authentication request of the information processing device, and
the authentication holding device
receives the authentication information together with the second authentication request information from the information processing device, and performs authentication of the information processing device by collating the authentication information received together with the second authentication request information with the authentication information held by the authentication holding device in response to the received second authentication request information.

5. The information processing device according to claim 4, wherein
the authentication holding device
notifies the information processing device of an authentication result of the authentication of the information processing device performed by the authentication holding device, and
the communication unit
receives information related to the authentication result of the authentication of the information processing device from the authentication holding device.

6. The information processing device according to claim 1, further comprising:
an operation execution unit that executes a predetermined operation on a basis of an authentication result of the authentication of the authentication holding device performed by the authentication unit.

7. The information processing device according to claim 6, further comprising:
an estimation unit that estimates an inter-device distance between the authentication holding device and the information processing device, wherein
the operation execution unit
executes the operation depending on the inter-device distance estimated by the estimation unit.

8. The information processing device according to claim 1, wherein
the communication unit
notifies the authentication holding device of an authentication result of the authentication of the authentication holding device performed by the authentication unit.

9. The information processing device according to claim 1, wherein
the communication unit
receives, from the authentication holding device, first certificate information indicating that the authentication holding device includes a first authentication function for performing authentication of the information processing device, and
the authentication unit
confirms that the authentication holding device includes the first authentication function on a basis of the first certificate information received by the communication unit.

10. The information processing device according to claim 1, wherein
the communication unit
receives, from the authentication holding device, confirmation request information related to a request for confirmation that the information processing device includes a second authentication function for performing authentication of the authentication holding device, and transmits second certificate information indicating that the information processing device includes the second authentication function to the authentication holding device in response to the received confirmation request information, and
the authentication holding device
receives the second certificate information from the information processing device, and confirms that the information processing device includes the second authentication function on a basis of the received second certificate information.

11. The information processing device according to claim 10, wherein
the authentication holding device,
when it is confirmed that the information processing device includes the second authentication function, generates proximity session identification information capable of identifying a proximity session state in which an inter-device distance between the authentication holding device including a first authentication function for performing authentication of the information processing device and the information processing device including the second authentication function is equal to or less than a predetermined distance, and transmits the generated proximity session identification information to the information processing device together with registration request information regarding a registration request of the proximity session identification information,
the communication unit
receives the proximity session identification information from the authentication holding device together with registration request information related to a registration request of the proximity session identification information, and
the authentication unit
registers the proximity session identification information received by the communication unit in the information processing device in response to the registration request information received by the communication unit, and performs pairing authentication of the authentication holding device for confirming that the authentication holding device is a device that is reliable as a communication partner on a basis of the proximity session identification information registered in the information processing device.

12. The information processing device according to claim 11, wherein
the communication unit
receives the proximity session identification information from the authentication holding device together with first pairing authentication request information related to a pairing authentication request of the authentication holding device, and
the authentication unit
performs pairing authentication of the authentication holding device by collating the proximity session identification information received together with the first pairing authentication request information by the communication unit with the proximity session identification information registered in the information processing device.

13. The information processing device according to claim 12, wherein
the communication unit
transmits the proximity session identification information registered in the information processing device to the authentication holding device together with second pairing authentication request information related to a pairing authentication request of the information processing device for confirming that the information processing device is a device that is reliable as a communication partner, and
the authentication holding device
receives the proximity session identification information together with the second pairing authentication request information from the information processing device, and performs pairing authentication of the information processing device by collating the proximity session identification information received together with the second pairing authentication request information with the proximity session identification information held by the authentication holding device in response to the received second pairing authentication request information.

14. The information processing device according to claim 13, wherein
the authentication holding device,
when it is confirmed that the information processing device is a reliable device as a communication partner on a basis of an authentication result of the pairing authentication, requests the user to perform personal authentication, and performs the personal authentication by collating personal authentication information input by the user with the authentication information held by the authentication holding device.

15. The information processing device according to claim 1, wherein
the communication unit
receives the authentication information that is encrypted by using a technology of a public key infrastructure (PKI).

16. The information processing device according to claim 1, wherein
the communication unit
receives the authentication information that is user identification information capable of identifying the user.

17. An information processing method performed by an information processing device, the method comprising:
receiving, in a case where an inter-device distance between an authentication holding device that holds authentication information used for personal authentication of a user and the information processing device is equal to or less than a predetermined distance, first authentication request information related to an authentication request of the authentication holding device transmitted from the authentication holding device and the authentication information; and
performing authentication of the authentication holding device based on the authentication information in response to the first authentication request information received.

18. An information processing system comprising: an authentication holding device that holds authentication information used for personal authentication of a user; and
an information processing device, wherein
the authentication holding device
estimates an inter-device distance between the authentication holding device and the information processing device, and transmits the authentication information to the information processing device together with first authentication request information related to an authentication request of the authentication holding device in a case where the estimated inter-device distance is equal to or less than a predetermined distance, and
the information processing device
receives the authentication information from the authentication holding device together with the first authentication request information, and performs authentication of the authentication holding device based on the authentication information in response to the received first authentication request information.

19. The information processing system according to claim 18, wherein
the authentication holding device
transmits the authentication information to the information processing device together with registration request information related to a registration request of the authentication information in a case where it is determined that the personal authentication of the user is successful on a basis of an authentication result of the personal authentication of the user, and
the information processing device
receives the authentication information together with the registration request information from the authentication holding device, registers the authentication information received together with the registration request information in the information processing device in response to the received registration request information, and performs authentication of the authentication holding device by collating the authentication information registered in the information processing device with the authentication information received together with the first authentication request information.

20. The information processing system according to claim 19, wherein
the information processing device
transmits the authentication information registered in the information processing device to the authentication holding device together with second authentication request information related to an authentication request of the information processing device in a case where the inter-device distance is equal to or less than a predetermined distance, and
the authentication holding device
receives the authentication information together with the second authentication request information from the information processing device, and performs authentication of the information processing device by collating the received authentication information with the authentication information held by the authentication holding device in response to the received second authentication request information.
